# EUROPÄISCHE PATENTSCHRIFT

(11) **EP 1 737 791 B1**
(45) Veröffentlichungstag und Bekanntmachung des Hinweises auf die Patenterteilung: **13.06.2018**
(21) Anmeldenummer: 05716576.3
(22) Anmeldetag: 13.04.2005
(51) Int. Cl.: C01B 33/20, C01B 37/00, C01B 39/02, C01B 39/04, C04B 35/16, B01J 29/04, B01D 53/02

(54) **MIKROPORÖSES GERÜSTSILIKAT UND VERFAHREN ZU SEINER HERSTELLUNG**
MICROPOROUS TECTOSILICATE AND METHOD FOR THE PRODUCTION THEREOF
TECTOSILICATE MICROPOREUX ET SON PROCEDE DE PRODUCTION

(30) Priorität: 13.04.2004 DE 102004017915
(43) Veröffentlichungstag der Anmeldung: 03.01.2007
(73) Patentinhaber: BASF SE, 67056 Ludwigshafen am Rhein (DE); rubitec Gesellschaft für Innovation und Technologie der Ruhr-Universität Bochum mbH, 44801 Bochum (DE)
(72) Erfinder: MÜLLER, Ulrich, 67435 Neustadt (DE); LIPPERT, Gerald, 68623 Lampertheim (DE); BROWN, James, Reuben, 68159 Mannheim (DE); GIES, Hermann, 45549 Sprockhövel (DE); MARLER, Bernd, 58285 Gevelsberg (DE); STRÖTER, Nadine, 44739 Bochum (DE); WANG, Yingxia, Beijing 100871 (CN)
(74) Vertreter: Herzog, Fiesser & Partner Patentanwälte PartG mbB
(86) Internationale Anmeldenummer: PCT/EP2005/003891
(87) Internationale Veröffentlichungsnummer: WO 2005/100242

(56) Entgegenhaltungen:
- WO-A-03/068679
- US-A- 4 495 303
- US-A- 4 552 739
- US-B1- 6 752 980
- US-B1- 6 756 030
- Y WANG, J SONG, H GIES: "The substitution of germanium for silicon in AST-type zeolite" SOLID STATE SCIENCE, Bd. 5, Nr. 11-12, Dezember 2003 (2003-12), Seiten 1421-1433, XP002332917 ELSEVIER, PARIS, FR
- Y X WANG, H GIES, B MARLER, U MÜLLER: "Synthesis and Crystal Structure of Zeolite RUB-41 Obtained as Calcination Product of a Layered Precursor: a Systematic Approach to a New Synthesis Route" CHEMISTRY OF MATERIALS, Bd. 17, Nr. 1, 11. Januar 2005 (2005-01-11), Seiten 43-49, XP002332918 WASHINGTON, DC, USA

## Beschreibung

Die vorliegende Erfindung betrifft ein Verfahren zur Herstellung von Silikaten, insbesondere zur Herstellung von Gerüstsilikaten mit Zeolithstruktur. Ebenso betrifft die vorliegende Erfindung die gemäß diesem Verfahrens erhältlichen Silikate, insbesondere Schichtsilikate und Gerüstsilikate. Weiter betrifft die vorliegende Erfindung diese Silikate an sich sowie deren Verwendung, insbesondere deren Verwendung als Molekularsiebe zur Auf- und/oder Abtrennung von Stoffgemischen, insbesondere zur Auftrennung von Alkan- und/oder Alken-Gasgemischen.

Y. Wang et al. in Solid State Sciences 2003, Band 5, Seiten 1421-1433 betrifft die Herstellung und Untersuchung von Zeolithen vom AST Strukturtyp, bei denen Silizium im Zeolithgitter teilweise durch Germanium ausgetauscht wurde.

In chemischen Produktions- oder Reinigungsverfahren stellt sich häufig die Aufgabe der Abtrennung mindestens eines Stoffes aus einem Stoffgemisch oder ganz allgemein der Auftrennung von Stoffgemischen. Grundsätzlich kann diese Auftrennung durch destillative Verfahren gelöst werden. Allerdings sind - insbesondere im Fall sehr eng siedender Gemische - diese destillativen Verfahren nicht oder nur unter Einsatz von Hilfsstoffen wirtschaftlich sinnvoll durchführbar. Ein Beispiel für die Auftrennung von eng siedenden Gemischen ist die Trennung von Alkanen oder Alkenen, wie beispielsweise die Auftrennung isomerer Alkane oder Alkene.

Eine der der vorliegenden Erfindung zugrunde liegenden Aufgaben war es daher, Verbindungen bereitzustellen, die als Molekularsiebe und/oder Adsorptionsmittel für derartige Ab- und/oder Auftrennungen eingesetzt werden können.

Eine weitere, der vorliegenden Erfindung zugrunde liegende Aufgabe war es, ein Verfahren zur Herstellung dieser Verbindungen bereitzustellen.

Eine weitere, der vorliegenden Erfindung zugrunde liegende Aufgabe war es, neue Silikate, insbesondere Zeolithe bereitzustellen, die zum einen für die oben beschriebenen Anwendungszwecke, ebenso aber auch für jeden weiteren denkbaren Zweck wie beispielsweise als Katalysatoren oder in anderen technischen Gebieten vorteilhaft eingesetzt werden können.

Demgemäß betrifft die vorliegende Erfindung ein Verfahren zur Herstellung eines mindestens Silicium und Sauerstoff enthaltenden Silikats, umfassend
(1) Mischen von Siliziumdioxid und/oder eines Siliciumdioxid-Precursors mit einer wässrigen Lösung, enthaltend mindestens eine R₁R₂R₃R₄N⁺ umfassende Tetraalkylammoniumverbindung und mindestens eine Base;
(2) Erwärmen der unter (1) erhaltenen kolloidalen Lösung auf eine Temperatur im Bereich von größer der unter dem gewählten Druck vorliegenden Siedetemperatur der kolloidalen Lösung bis 180 °C bei Normaldruck unter Erhalt einer mindestens ein Silikat enthaltenden Suspension,
dadurch gekennzeichnet, dass R₁ und R₂ gleich Methyl und sowohl R₃ als auch R₄ gleich n-Propyl sind.

Neben der mindestens einen R₁R₂R₃R₄N⁺ umfassenden Tetraalkylammoniumverbindung kann erfindungsgemäß eine von dieser Verbindung verschiedene Base einge-setzt werden. Hierbei sind etwa Ammoniumhydroxid NH₄OH, Alkalihydroxide oder Erdalkalihydroxide wie etwa Natriumhydroxid oder Kaliumhydroxid oder Mischungen aus zwei oder mehr dieser Verbindungen zu nennen. In diesem Fall enthält die mindestens eine R₁R₂R₃R₄N⁺ umfassende Tetraalkylammoniumverbindung ein oder mehrere geeignete Anionen wie beispielsweise Halogenanionen wie beispielsweise Fluorid oder Chlorid oder Bromid oder lodid.

Gemäß einer bevorzugten Ausführungsform enthält die mindestens eine R₁R₂R₃R₄N⁺ umfassende Tetraalkylammoniumverbindung auch die gemäß (1) eingesetzte Base als Anion. Als basische Anionen sind diesbezüglich unter anderem das Hydroxidion oder Aluminate zu nennen. Als basisches Anion ist das Hydroxidion besonders bevorzugt.

Demgemäß betrifft die vorliegende Erfindung auch ein wie oben beschriebenes Verfahren, das dadurch gekennzeichnet ist, dass die mindestens eine R₁R₂R₃R₄N⁺ umfassende Tetraalkylammoniumverbindung ein basisches Anion, bevorzugt ein Hydroxidion, enthält.

Ebenso betrifft die vorliegende Erfindung daher auch ein wie oben beschriebenes Verfahren, das dadurch gekennzeichnet ist, dass die gemäß (1) eingesetzte wässrige Lösung Dimethyldipropylammoniumhydroxid (DMDPAH) enthält.

Die molaren Verhältnisse von Siliciumdioxid, Tetraalkylammonium-Verbindung, insbesondere Tetraalkylammoniumhydroxid-Verbindung, und Wasser können im Wesentlichen beliebig eingestellt werden, solange gewährleistet ist, dass gemäß (2) mindestens ein Silikat durch Kristallisation erhalten wird.

Gemäß einer bevorzugten Ausführungsform werden die Mengen an eingesetztem Siliciumdioxid und/oder Precursor davon, Tetraalkylammoniumhydroxyid-Verbindung und Wasser so gewählt, dass die gemäß (1) erhaltene kolloidale Lösung Siliciumdioxid, Tetraalkylammoniumhydroxyid-Verbindung und Wasser in Gewichtsverhältnissen im Bereich von 1 : (0,45-0,55) : (8-12) enthält. Weiterhin sind hinsichtlich der oben genannten Bereiche Wassergehalte bis hin zu 15 möglich, wobei als untere Grenze beispielsweise 3 zu nennen ist. Demgemäß kann die gemäß (1) erhaltene kolloidale Lösung Siliciumdioxid, Tetraalkylammoniumhydroxyid-Verbindung und Wasser in Gewichtsverhältnissen im Bereich von 1 : (0,45-0,55) : (3-15) enthalten. Weiter kann erfindungsgemäß der Wassergehalt im Bereich von 4 bis 15 oder von 5 bis 15 oder von 6 bis 15 oder von 7 bis 15 oder von 8 bis 15 oder von 9 bis 15 oder von 10 bis 15 oder von 11 bis 15 oder von 12 bis 15 oder von 13 bis 15 oder von 14 bis 15 oder von 3 bis 14 oder von 3 bis 13 oder von 3 bis 12 oder von 3 bis 11 oder von 3 bis 10 oder von 3 bis 9 oder von 3 bis 8 oder von 3 bis 7 oder von 3 bis 6 oder von 3 bis 5 oder von 3 bis 4 liegen. Weiter bevorzugte Bereiche sind beispielsweise von 4 bis 14,5 oder von 5 bis 14 oder von 6 bis 13,5 oder von 7 bis 13 oder von 7,5 bis 12,5.

Demgemäß betrifft die vorliegende Erfindung für die bevorzugten Tetraalkylammoniumhydroxyid-Verbindungen auch ein wie oben beschriebenes Verfahren, das dadurch gekennzeichnet ist, dass die gemäß (1) erhaltene kolloidale Lösung SiO₂, DMDPAH und Wasser in den Gewichtsverhältnissen SiO₂ : DMDPAH : Wasser von 1 : (0,45-0,55) : (8-12), weiter bevorzugt von 1 : (0,46-0,54) : (8-12), weiter bevorzugt von 1 : (0,47-0,53) : (8-12), weiter bevorzugt von 1 : (0,48-0,52) : (8-12) und insbesondere bevorzugt von 1 : (0,49-0,51) : (8-12) enthält. Dabei liegt der Wassergehalt jeweils weiter bevorzugt im Bereich von 8 bis 11 oder von 8 bis 10 oder von 8 bis 9 oder von 9 bis 12 oder von 9 bis 11 oder von 9 bis 10 oder von 10 bis 12 oder von 10 bis 11 oder von 11 bis 12.

Grundsätzlich ist es möglich, die gemäß (1) erhaltene kolloidale Lösung gemäß (2) unter jedem geeigneten Druck bei jeder geeigneten Temperatur zu erwärmen, solange gewährleistet ist, dass in der kolloidalen Lösung mindestens ein Silikat kristallisiert. Bevorzugt sind hierbei Temperaturen, die bei dem gewählten Druck oberhalb des Siedepunktes der gemäß (1) erhaltenen Lösung liegen. Weiter bevorzugt sind Temperaturen bis zu 180 °C bei Normaldruck. Gemäß einer besonders bevorzugten Ausführungsform des erfindungsgemäßen Verfahrens wird die Kristallisation gemäß (2) unter Normaldruck durchgeführt, während in den meisten hydrothermalen Verfahren des Standes der Technik die Kristallisation unter gegenüber Normaldruck erhöhtem Druck durchgeführt wird.

Demgemäß betrifft die vorliegende Erfindung auch ein wie oben beschriebenes Verfahren, das dadurch gekennzeichnet ist, dass die hydrothermale Kristallisation in (2) bei Normaldruck durchgeführt wird.

Der Begriff "Normaldruck", wie er im Rahmen der vorliegenden Erfindung verwendet wird, bezeichnet einen Druck von idealer Weise 101.325 Pa, der jedoch innerhalb der dem Fachmann bekannten Grenzen Schwankungen unterworfen sein kann. Beispielsweise kann der Druck im Bereich von 95.000 bis 106.000 oder von 96.000 bis 105.000 oder 97.000 bis 104.000 oder von 98.000 bis 103.000 oder von 99.000 bis 102.000 Pa liegen.

Bevorzugt liegt die gemäß (2) verwendete Temperatur bei Normaldruck im Bereich von 100 bis 180 °C, weiter bevorzugt im Bereich von 110 bis 175 °C, weiter bevorzugt im Bereich von 120 bis 170 °C, weiter bevorzugt im Bereich von 130 bis 165 °C und insbesondere bevorzugt im Bereich von 140 bis 160 °C.

Demgemäß betrifft die vorliegende Erfindung auch ein wie oben beschriebenes Verfahren, das dadurch gekennzeichnet ist, dass die gemäß (1) erhaltene kolloidale Lösung gemäß (2) bei Normaldruck auf eine Temperatur im Bereich von 100 bis 180 °C erwärmt wird.

Diese Temperatur, auf die die gemäß (1) erhaltene kolloidale Lösung gemäß (2) erwärmt wird, kann grundsätzlich solange gehalten werden, bis die Kristallisation im erwünschten Umfang erfolgt ist. Bevorzugt sind hierbei Zeiten im Bereich von bis zu 45 Tagen, bevorzugt von 12 h bis zu 45 Tagen, weiter bevorzugt im Bereich von 12 h bis 30 Tagen, weiter bevorzugt im Bereich von 1 bis 30 Tagen wie beispielsweise von ungefähr 1, 2, 5, 10, 15, 20, 25 oder 30 Tagen.

Demgemäß betrifft die vorliegende Erfindung auch ein wie oben beschriebenes Verfahren, das dadurch gekennzeichnet ist, dass die gemäß (1) erhaltene kolloidale Lösung gemäß (2) für einen Zeitraum im Bereich von 12 h bis 30 Tagen erwärmt wird.

Zeiträume in einem Bereich von bis zu 12 h wie beispielsweise 0.5 bis 12 h sind im Rahmen des erfindungsgemäßen Verfahrens ebenfalls denkbar.

Als Siliciumdioxid oder Precursor davon kann grundsätzlich jede geeignete Verbindung eingesetzt werden. Als Precursor-Verbindung sind beispielsweise Tetraalkoxysilane wie etwa Tetraethoxysilan oder Tetrapropoxysilan zu nennen. Besonders bevorzugt wird im erfindungsgemäßen Verfahren kein Siliciumdioxid-Precursor, sondern Siliciumdioxid als solches eingesetzt. Wiederum bevorzugt ist dabei amorphes Siliciumdioxid.

Demgemäß betrifft die vorliegende Erfindung auch ein wie oben beschriebenes Verfahren, das dadurch gekennzeichnet ist, dass gemäß (1) amorphes Siliciumdioxid eingesetzt wird.

Hierbei kann grundsätzlich jedes geeignete amorphe Siliciumdioxid verwendet werden. Bevorzugt wird amorphes Siliciumdioxid mit einer spezifischen Oberfläche (BET, Brunauer - Emmet - Teller; bestimmt gemäß DIN 66131 durch Stickstoffadsorption bei 77 K) im Bereich von 10 bis 400 m²/g, bevorzugt im Bereich von 10 bis 100 m²/g und besonders bevorzugt im Bereich von 10 bis 50 m²/g. Weitere bevorzugte Bereiche sind 50 bis 100 m²/g oder 100 bis 300 m²/g oder 300 bis 400 m²/g.

Gemäß (1) werden zusätzlich zu Siliciumdioxid bevorzugt DMDPAH eingesetzt.

Diese Verbindungen können nach jedem denkbaren Verfahren hergestellt werden. Gemäß einer bevorzugten Ausführungsform des erfindungsgemäßen Verfahrens werden DMDPAH durch Umsetzung von Dipropylamin und Methyliodid und anschließenden Anionenaustausch erhalten.

Gemäß einer weiter bevorzugten Ausführungsform werden Dipropylamin und Methyliodid in einem geeigneten Lösungsmittel oder Lösungsmittelgemisch, bevorzugt in Ethanol miteinander umgesetzt. Die Temperatur, bei der diese Umsetzung erfolgt, liegt bevorzugt im Bereich von 20 bis 75 °C, weiter bevorzugt im Bereich von 30 bis 60 °C und insbesondere bevorzugt im Bereich von 40 bis 50 °C.

Gemäß einer weiteren Ausführungsform des erfindungsgemäßen Verfahrens können DMDPAH ausgehend von Dimethylamin und Propylbromid in einem geeigneten Lösungsmittel, beispielsweise bevorzugt Ethanol, bei einer geeigneten Temperatur, beispielsweise bevorzugt von 40 bis 50 °C, hergestellt werden.

Der erfindungsgemäße Anionenaustausch erfolgt bevorzugt nach Abtrennung wie etwa durch Filtrieren, Zentrifugieren oder ein anderes Fest-Flüssig-Trennverfahren, beispielsweise bevorzugt durch Filtration, und Waschen des jeweiligen Ammoniumhydroxides, beispielsweise bevorzugt mit einem geeigneten Alkohol wie beispielsweise Ethanol, durch ein geeignetes lonenaustauscherharz wie beispielsweise ein Amberlyst™-Harz oder ein Harz vom Typ AG1-X8 (BioRad). Möglich ist auch lonenaustausch unter Verwendung von Ag₂O.

DMDPAH wird in (1) bevorzugt als Lösung, insbesondere bevorzugt als wässrige Lösung eingesetzt, wobei die Konzentration der wässrigen Lösung bezüglich DMDPAH bevorzugt im Bereich von 0,4 bis 1 mol/l liegt.

Gemäß einer bevorzugten Ausführungsform des erfindungsgemäßen Verfahrens wird gemäß (1) DMDPAH eingesetzt.

Die Temperatur bei der Herstellung der kolloidalen Lösung gemäß (1) liegt bevorzugt im Bereich von 10 bis 40 °C, weiter bevorzugt im Bereich von 15 bis 35 °C und insbesondere bevorzugt im Bereich von 20 bis 30 °C.

Im Rahmen des erfindungsgemäßen Verfahrens ist es möglich, die kolloidale Lösung gemäß (1) in einem Schritt durch Mischen von amorphem Siliciumdioxid und Tetraalkylammoniumhydroxid-Lösung herzustellen.

Gemäß einer bevorzugten Ausführungsform des erfindungsgemäßen Verfahrens wird zunächst in einem ersten Schritt eine kolloidale Lösung hergestellt, die Tetraalkylammoniumhydroxid, Siliciumdioxid und Wasser mit einem Gewichtsverhältnis von SiO₂ : Tetraalkylammoniumhydroxid : Wasser von bevorzugt 1 : (0,45-0,55) : (3-15), weiter bevorzugt von 1 : (0,47-0,53) : (3-15) und insbesondere bevorzugt von 1 : (0,49-0,51) : (3-15) enthält. In mindestens einem zweiten Schritt wird anschließend der Wassergehalt der in dem ersten Schritt erhaltenen Lösung mittels eines geeigneten Verfahrens so eingestellt, dass er in den oben angegebenen bevorzugten Grenzen liegt.

Als unter anderem bevorzugtes geeignetes Verfahren wird der Wassergehalt durch Wasserentfernung in mindestens einer geeigneten Vorrichtung eingestellt. Dabei wird das Wasser bei einer Temperatur im Bereich von bevorzugt 60 bis 85 °C, weiter bevorzugt von 65 bis 80 °C und insbesondere bevorzugt von 65 bis 75 °C entfernt.

Demgemäß betrifft die vorliegende Erfindung auch das wie oben beschriebene Verfahren, das dadurch gekennzeichnet ist, dass gemäß (1)
(i) eine kolloidale Lösung hergestellt wird, die Tetraalkylammoniumhydroxid, Siliciumdioxid und Wasser mit einem Gewichtsverhältnis von SiO₂ : Tetraalkylammoniumhydroxid : Wasser von bevorzugt 1 : (0,45-0,55) : (3-15) enthält, und
(ii) der Wassergehalt der gemäß (i) erhaltenen kolloidalen Lösung so eingestellt wird, dass eine kolloidale Lösung erhalten wird, die Tetraalkylammoniumhydroxid, Siliciumdioxid und Wasser mit einem Gewichtsverhältnis von SiO₂ : Tetraalkylammoniumhydroxid : Wasser von bevorzugt 1 : (0,45-0,55) : (8-12) enthält.

Als mindestens eine geeignete Vorrichtung seien unter anderem Rotationsverdampfer oder Öfen genannt. Besonders bevorzugt ist ein Ofen. Bevorzugt sind diesbezüglich unter anderem Vorrichtungen, die eine Wasserentfernung bei vermindertem Druck und damit bei niedrigen Temperaturen erlauben.

Das Erwärmen und die anschließende Herstellung des mindestens einen Silikates kann in jeder geeigneten Vorrichtung durchgeführt werden. Beispielsweise erfolgt (2) in einem Autoklaven.

Die kolloidale Lösung wird zur Kristallisation gemäß (2) vorzugsweise geeignet gerührt. Ebenso ist es möglich, das Reaktionsgefäß, in dem die Kristallisation durchgeführt wird, zu rotieren.

Aus der aus (2) erhaltenen Suspension wird das mindestens eine Silikat gemäß einer Ausführungsform des erfindungsgemäßen Verfahrens in mindestens einem Schritt geeignet abgetrennt. Diese Abtrennung kann beispielsweise über Filtrations-, Ultrafiltrations-, Diafiltrations-, Zentrifugierverfahren oder etwa Sprühtrocknungs- und Sprühgranulierverfahren erfolgen. Bevorzugt ist die Abtrennung über Sprühtrocknung oder Filtration.

Demgemäß betrifft die vorliegende Erfindung auch das wie oben beschriebene Verfahren, zusätzlich umfassend
(3) Abtrennung des mindestens einen Silikats aus der gemäß (2) erhaltenen Suspension.

Gemäß einer Ausführungsform des erfindungsgemäßen Verfahrens kann die Kristallisation gemäß (2) durch geeignetes Quenchen abgebrochen werden. Hierbei ist es besonders bevorzugt, die Suspension mit Wasser zu versetzen, das eine Temperatur aufweist, die zum Abbruch der Kristallisation geeignet ist.

Das wie oben beschrieben abgetrennte mindestens eine Silikat wird gemäß einer bevorzugten Ausführungsform des erfindungsgemäßen Verfahrens gewaschen und/oder getrocknet.

Demgemäß betrifft die vorliegende Erfindung auch das wie oben beschriebene Verfahren, zusätzlich umfassend
(4) Waschen
   und/oder
(5) Trocknen
des gemäß (3) erhaltenen Silikats.

Dabei kann sich an die Abtrennung mindestens ein Waschschritt und/oder mindestens ein Trocknungsschritt anschließen, wobei bei mindestens zwei Waschschritten gleiche oder verschiedene Waschmittel oder Waschmittelgemische und bei mindestens zwei Trocknungsschritten gleiche oder verschiedene Trocknungstemperaturen verwendet werden können.

Die Trocknungstemperaturen liegen hierbei bevorzugt im Bereich von Raumtemperatur bis 95 °C, weiter bevorzugt von 40 bis 90 °C, weiter bevorzugt von 50 bis 85 °C, weiter bevorzugt im Bereich von 60 bis 80 °C und besonders bevorzugt im Bereich von 70 bis 80 °C.

Demgemäß betrifft die vorliegende Erfindung auch das wie oben beschriebene Verfahren, wobei das Silikat gemäß (4) mit Wasser gewaschen und/oder gemäß (5) bei einer Temperatur im Bereich von Raumtemperatur bis 80 °C getrocknet wird.

Als Waschmittel können beispielsweise Wasser, Alkohole wie beispielsweise Methanol, Ethanol oder Propanol, oder Gemische aus zwei oder davon eingesetzt werden. Als Mischungen seien beispielsweise Mischungen aus zwei oder mehr Alkoholen wie beispielsweise Methanol und Ethanol oder Methanol und Propanol oder Ethanol und Propanol oder Methanol und Ethanol und Propanol, oder Mischungen aus Wasser und mindestens einem Alkohol wie beispielsweise Wasser und Methanol oder Wasser und Ethanol oder Wasser und Propanol oder Wasser und Methanol und Ethanol oder Wasser und Methanol und Propanol oder Wasser und Ethanol und Propanol oder Wasser und Methanol und Ethanol und Propanol genannt. Bevorzugt sind Wasser oder eine Mischung aus Wasser und mindestens einem Alkohol, bevorzugt Wasser und Ethanol, wobei Wasser als alleiniges Waschmittel ganz besonders bevorzugt ist.

Gemäß dem erfindungsgemäßen Verfahren wird ein Silikat, insbesondere ein Schichtsilikat erhalten.

Demgemäß betrifft die vorliegende Erfindung auch das Silikat an sich, das dadurch gekennzeichnet ist, dass im Röntgenbeugungsmuster durch Cu K alpha 1-Strahlung mindestens die folgenden Reflexe auftreten:

| Intensität (%) | Beugungswinkel 2 θ / ° [Cu K(alpha 1)] |
|---|---|
| 100 | 8,0 - 8,4 |
| 11 - 21 | 11,0 - 11,4 |
| 13 - 23 | 13,2 - 13,6 |
| 5 - 15 | 18,0 - 18,4 |
| 7 - 17 | 18,4 - 18,8 |
| 19 - 29 | 19,9 - 20,0 |

wobei sich die Angabe 100 % auf die Intensität des höchsten Peaks im Röntgendiffraktogramm bezieht.

Insbesondere betrifft die vorliegende Erfindung das Silikat an sich, das dadurch gekennzeichnet ist, dass im Röntgenbeugungsmuster durch Cu K alpha 1-Strahlung mindestens die folgenden Reflexe auftreten:

| Intensität (%) | Beugungswinkel 2 θ / ° [Cu K(alpha 1)] |
|---|---|
| 100 | 8,0 - 8,4 |
| 11 - 21 | 11,0 - 11,4 |
| 13 - 23 | 13,2 - 13,6 |
| 5 - 15 | 18,0 - 18,4 |
| 7 - 17 | 18,4 - 18,8 |
| 19 - 29 | 19,8 - 20,2 |
| 20 - 30 | 22,0 - 22,35 |
| 6 - 16 | 22,36 - 22,7 |
| 23 - 33 | 23,3 - 23,59 |
| 22 - 32 | 23,60 - 23,8 |

Die erfindungsgemäßen oder erfindungsgemäß hergestellten Schichtsilikate liegen bevorzugt in der Raumgruppe P 2/c vor. Im Falle, dass als Edukte, wie oben beschrieben, Tetraalkylammoniumhydroxid und Siliciumdioxid und/oder Siliciumdioxid-Precursor eingesetzt wurden, weisen die erfindungsgemäß hergestellten Schichtsilikate bevorzugt folgende Gitterparameter, bestimmt über Rietveld-Analyse auf:
- a = 7.33(1) Å
- b = 10.72(1) Å
- c = 17.51(1) Å
- beta = 115.7(1) °.

Die Rietveld-Analyse ist beschrieben in R. A. Young (Herausgeber), The Rietveld Method, Oxford University Press, 1995, Oxford, insbesondere in Kapitel 7: Analytical profile fitting of X-ray powder diffraction profiles in Rietveld analysis, Seiten 111-131.

Gemäß 29-Si MAS NMR-Spektroskopie weisen die erfindungsgemäßen Schichtsilikate ein Tieffeld-Signal bei in etwa 104 ppm auf, das charakteristisch ist für eine schichtsilikattypische Silanolgruppe.

Gemäß 1-H NMR-Spektroskopie weisen die erfindungsgemäßen Schichtsilikate ein Tieffeld-Signal bei in etwa 16,4 ppm auf, das charakteristisch ist für eine schichtsilikattypische Silanolgruppe.

Die angegebenen chemischen Verschiebungen beziehen sich auf TMS als internen Standard.

Das gemäß (2) erhaltene Silikat wird gemäß einer besonders bevorzugten Ausführungsform des erfindungsgemäßen Verfahrens gemäß (6) in mindestens einem zusätzlichen Schritt kalziniert.

Dabei ist es grundsätzlich möglich, die Suspension, enthaltend das mindestens eine Silikat, direkt der Kalzinierung zuzuführen. Bevorzugt wird das Silikat vor der Kalzinierung aus der Suspension, wie oben beschrieben, gemäß (3) abgetrennt.

Vor der Kalzinierung kann das aus der Suspension abgetrennte Silikat mindestens einem wie oben beschriebenen Waschschritt (4) und/oder mindestens einem wie oben beschriebenen Trocknungsschritt (5) unterworfen werden. Bevorzugt wird das aus der Suspension abgetrennte Silikat getrocknet und ohne Waschschritt der Kalzinierung zugeführt.

Die Kalzinierung gemäß (6) des gemäß (2) und/oder (3) und/oder (4) und/oder (5) erhaltenen Silikates erfolgt bevorzugt bei einer Temperatur im Bereich von bis zu 600 °C unter Erhalt eines Gerüstsilikates.

Gemäß einer bevorzugten Ausführungsform des erfindungsgemäßen Verfahrens erfolgt hierbei die Aufheizung des Silikates von Raumtemperatur auf eine Temperatur von bis zu 600 °C, wobei weiter bevorzugt die Aufheizrate im Bereich von 0,1 bis 12 °C/h, weiter bevorzugt von 1 bis 11 °C/h und besonders bevorzugt im Bereich von 5 bis 10 °C/h liegt.

Besonders bevorzugt sind Kalzinierungstemperaturen im Bereich von 300 bis 600 °C.

Gemäß einer möglichen Ausgestaltung des erfindungsgemäßen Verfahrens wird die Kalzinierung temperaturgestaffelt durchgeführt. Der Begriff "temperaturgestaffelt", wie im Rahmen der vorliegenden Erfindung verwendet wird, bezeichnet eine Kalzinierung, bei der das zu kalzinierende Silikat auf eine bestimmte Temperatur aufgeheizt wird, bei dieser Temperatur für eine bestimmte Zeit gehalten wird, und von dieser Temperatur auf mindestens eine weitere Temperatur aufgeheizt wird und dort wiederum für eine bestimmte Zeit gehalten wird.

Bevorzugt wird das zu kalzinierende Silikat bei bis zu 4 Temperaturen, weiter bevorzugt bei bis zu 3 Temperaturen und besonders bevorzugt bei 2 Temperaturen gehalten.

Diesbezüglich liegt die erste Temperatur bevorzugt im Bereich von 500 bis 540 °C, weiter bevorzugt im Bereich von 500 bis 535 °C, weiter bevorzugt im Bereich von 510 bis 530 °C und insbesondere bevorzugt im Bereich von 515 bis 525 °C. Diese Temperatur wird bevorzugt für eine Zeit im Bereich von 8 bis 24 h, weiter bevorzugt von 9 bis 18 h und insbesondere von 10 bis 14 Stunden gehalten.

Die zweite Temperatur liegt bevorzugt im Bereich von größer 540 bis 600 °C, weiter bevorzugt im Bereich von 550 bis 580 °C und insbesondere bevorzugt im Bereich von 555 bis 570 °C. Diese Temperatur wird bevorzugt für eine Zeit im Bereich von 0,5 bis 6 h, weiter bevorzugt von 1 bis 4 h und insbesondere von 1 bis 3 Stunden gehalten.

Demgemäß betrifft die vorliegende Erfindung auch ein wie oben beschriebenes Verfahren, das dadurch gekennzeichnet ist, dass die Kalzinierung temperaturgestaffelt im Bereich von bis zu 600 °C, bevorzugt von 300 bis 600 °C erfolgt.

Die Kalzinierung kann in jeder geeigneten Atmosphäre erfolgen wie beispielsweise Luft, Magerluft, Stickstoff, Wasserdampf, synthetische Luft, Kohlendioxid. Bevorzugt erfolgt die Kalzinierung unter Luft.

Die Kalzinierung kann in jeder dafür geeigneten Vorrichtung durchgeführt werden. Bevorzugt erfolgt die Kalzinierung in einem Drehrohr, in einem Bandkalzinierer, in einem Muffelofen, in situ in einer Vorrichtung, in der das Silikat zu einem späteren Zeitpunkt bestimmungsgemäß beispielsweise als Molekularsieb oder für eine andere, unten beschriebene Anwendung eingesetzt wird. Insbesondere bevorzugt sind hierbei Drehrohr und Bandkalzinierer.

Gemäß des erfindungsgemäßen Verfahrens wird ein Silikat, insbesondere ein Gerüstsilikat erhalten.

Demgemäß betrifft die vorliegende Erfindung auch das wie oben beschriebene Verfahren, zusätzlich umfassend
(6) Calcinieren des gemäß (2) erhaltenen und
   - gegebenenfalls gemäß (3) abgetrennten und
   - gegebenenfalls gemäß (4) gewaschenen und/oder gemäß (5) getrockneten Silikates
unter Erhalt eines Gerüstsilikates.

Demgemäß betrifft die vorliegende Erfindung auch ein Gerüstsilikat an sich, das dadurch gekennzeichnet ist, dass im Röntgenbeugungsmuster durch Cu K alpha 1-Strahlung mindestens die folgenden Reflexe auftreten:

| Intensität / % | Beugungswinkel 2θ / ° [Cu K(alpha 1)] |
|---|---|
| 100 | 9,8 - 10,2 |
| 24 - 34 | 11,0 - 11,4 |
| 9 - 19 | 15,5 - 15,9 |
| 12 - 22 | 19,4 - 19,6 |
| 19 - 29 | 19,6 - 19,8 |

wobei sich die Angabe 100 % auf die Intensität des höchsten Peaks im Röntgendiffraktogramm bezieht.

Insbesondere betrifft die vorliegende Erfindung das Gerüstsilikat an sich, das dadurch gekennzeichnet ist, dass im Röntgenbeugungsmuster durch Cu K alpha 1-Strahlung mindestens die folgenden Reflexe auftreten:

| Intensität / % | Beugungswinkel 2θ / ° [Cu K(alpha 1)] |
|---|---|
| 100 | 9,8 - 10,2 |
| 24 - 34 | 11,0 - 11,4 |
| 9 - 19 | 15,5 - 15,9 |
| 12 - 22 | 19,4 - 19,6 |
| 19 - 29 | 19,6 - 19,8 |
| 8 - 18 | 26,2 - < 26,3 |
| 8 - 18 | 26,3 - < 26,4 |
| 13 - 23 | 26,4 - 26,6 |

Die erfindungsgemäßen oder erfindungsgemäß hergestellten Gerüstsilikate liegen bevorzugt in der Raumgruppe P 2/c vor. Im Falle, dass als Edukte, wie oben beschrieben, Tetraalkylammoniumhydroxid und Siliciumdioxid und/oder Siliciumdioxid-Precursor eingesetzt wurden, weisen die erfindungsgemäß hergestellten Gerüstsilikate bevorzugt folgende Gitterparameter, bestimmt über Rietveld-Analyse auf:
- a = 7,34(1) Å
- b = 8,72(1) Å
- c = 17,17(1) Å
- beta = 114,2(1) °.

Gemäß 29-Si MAS NMR-Spektroskopie fehlt bei den erfindungsgemäßen Gerüstsilikaten das bei den oben beschriebenen, erfindungsgemäßen Schichtsilikaten gefundene Tieffeld-Signal bei in etwa 104 ppm auf, das charakteristisch ist für eine schichtsilikattypische Silanolgruppe.

Die erfindungsgemäßen Gerüstsilikate weisen bevorzugt 8 MR- und 10 MR-Kanäle auf, wobei die 8 MR-Kanäle insbesondere bevorzugt parallel zu c der Elementarzelle, wie oben angegeben, und die 10 MR-Kanäle insbesondere bevorzugt parallel zu a der Elementarzelle, wie oben angegeben, verlaufen. Hinsichtlich der Definition der 8MR- und 10MR-Kanäle sei auf Ch. Baerlocher, W.M. Meier, D.H. Olson, Atlas of Zeolite Framework Types, 5. Auflage, 2001, Elsevier, Seiten 10 - 15 verwiesen.

Insbesondere zeichnen sich die erfindungsgemäßen Gerüstsilikate durch eine im Wesentlichen monomodale Verteilung bezüglich der zweidimensionalen 8 MR- und 10 MR-Kanal-Porenstruktur aus. Die Porenöffnungen sowohl der 8 MR-Kanäle als auch der 10 MR-Kanäle weisen diesbezüglich jeweils eine Fläche bevorzugt im Bereich von (5,70 - 6,00) x (4,00 - 4,20) Å², besonders bevorzugt von (5,80 - 5,90) x (4,05 - 4,15) Å² auf.

Die erfindungsgemäßen Gerüstsilikate weisen bevorzugt Mikroporen mit einer spezifischen Oberfläche im Bereich von größer 200 m²/g, weiter bevorzugt von größer 200 bis 800 m²/g, weiter bevorzugt von 300 bis 700 m²/g und besonders bevorzugt von 400 bis 600 m²/g auf, jeweils bestimmt gemäß DIN 66135 (Langmuir).

Die erfindungsgemäßen Gerüstsilikate weisen bevorzugt Poren mit einem Porenvolumen im Bereich von 0,15 bis 0,21 ml/g, weiter bevorzugt von 0,16 bis 0,20 ml/g und besonders bevorzugt von 0,17 bis 0,19 ml/g auf, jeweils bestimmt gemäß DIN 66134.

Demgemäß stellen die erfindungsgemäßen Gerüstsilikate Silikate eines mikroporösen zeolithischen Typs dar.

Die thermische Stabilität der erfindungsgemäßen Gerüstsilikate liegt bevorzugt bei mindestens 600 °C, weiter vorzugsweise bei mehr als 600 °C.

Der Begriff "thermische Stabilität", wie er in diesem Zusammenhang im Rahmen der vorliegenden Erfindung verwendet wird, bezeichnet diejenige Temperatur, bei der unter Normaldruck die spezifische Gitterstruktur des Gerüstsilikates erhalten bleibt.

Gemäß weiterer Ausführungsformen der vorliegenden Erfindung ist es möglich, dass die erfindungsgemäß hergestellten Silikate neben Silicium und Sauerstoff mindestens ein Atom mindestens eines anderen Elementes enthalten. So ist es möglich, in die Silikatstruktur mindestens ein Atom mindestens eines der Elemente Aluminium, Bor, Eisen, Titan, Zinn, Germanium, Zirkon, Vanadium oder Niob einzubauen.

Wird beispielsweise Aluminium eingebaut, so können neben der Tetraalkylammonium-verbindung und dem Siliciumdioxid und/oder Siliciumdioxid-Precursor als Edukte beispielsweise metallisches Aluminium oder geeignete Aluminate wie beispielsweise Alkalialuminate und/oder Aluminiumalkoholate wie beispielsweise Aluminiumtriisopropylat eingesetzt werden.

Wird beispielsweise Bor eingebaut, so können neben der Tetraalkylammoniumverbindung und dem Siliciumdioxid und/oder Siliciumdioxid-Precursor als Edukte beispielsweise freie Borsäure und/oder Borate und/oder Borsäureester wie etwa Borsäuretriethylester eingesetzt werden.

Wird beispielsweise Titan eingebaut, so können neben der Tetraalkylammoniumverbindung und dem Siliciumdioxid und/oder Siliciumdioxid-Precursor als Edukte beispielsweise Titan-Alkoholate wie beispielsweise Titanethanolate oder Titanpropylate eingesetzt werden.

Wird beispielsweise Zinn eingebaut, so können neben der Tetraalkylammoniumverbindung und dem Siliciumdioxid und/oder Siliciumdioxid-Precursor als Edukte beispielsweise Zinnchloride und/oder metallorganische Zinnverbindungen wie etwa Zinnalkoholate oder Chelate wie etwa Zinnacetylacetonate eingesetzt werden.

Wird beispielsweise Zirkon eingebaut, so können neben der Tetraalkylammoniumverbindung und dem Siliciumdioxid und/oder Siliciumdioxid-Precursor als Edukte beispielsweise Zirkonchlorid und/oder Zirkonalkoholate eingesetzt werden.

Wird beispielsweise Vanadium oder Germanium oder Niob eingebaut, so können neben der Tetraalkylammoniumverbindung und dem Siliciumdioxid und/oder Siliciumdioxid-Precursor als Edukte beispielsweise Vanadiumchlorid oder Germaniumchlorid oder Niobchlorid eingesetzt werden.

Demgemäß betrifft die vorliegende Erfindung auch ein wie oben beschriebenes Verfahren und die wie oben beschriebenen Schicht- und/oder Gerüst-, insbesondere die wie oben beschriebenen Gerüst-Silikate, wobei die Silikate neben Si und O zusätzlich mindestens eines der Elemente Al, B, Fe, Ti, Sn, Ge, Zr, V oder Nb enthalten.

Je nach Art der Atome, die in das Gitter eingebaut werden, kann ein negativ geladenes Gerüst entstehen, das es beispielsweise ermöglicht, das Silikat mit Kationen zu beladen. Als solche sind unter anderem die Ammoniumionen R₁R₂R₃R₄N⁺ der Templatverbindungen, Platin-, Palladium-, Rhodium- oder Rutheniumkationen, Goldkationen, Alkalimetallkationen wie beispielsweise Natrium- oder Kalium-Ionen oder Erdalkalimetallkationen wie beispielsweise Magnesium- oder Calcium-Ionen zu erwähnen.

In vielen technischen Anwendungen ist es von Anwenderseite her oft erwünscht, nicht das kristalline Material an sich einzusetzen, sondern das kristalline Material, das zu Formkörpern verarbeitet wurde. Solche Formkörper sind gerade in vielen großindustriellen Verfahren nötig, um beispielsweise Abtrennungen von Stoffen aus Stoffgemischen in beispielsweise Rohrreaktoren sinnvoll betreiben zu können.

Demgemäß betrifft die vorliegende Erfindung auch einen Formkörper, enthaltend das oben beschriebene kristalline, mikroporöse Gerüstsilikat. Von der vorliegenden Erfindung mit umfasst sind auch Formkörper, umfassend das oben beschriebene Schichtsilikat.

Generell kann der Formkörper neben dem erfindungsgemäßen Gerüstsilikat sämtliche denkbaren weiteren Verbindungen umfassen, solange gewährleistet ist, dass der resultierende Formkörper für die erwünschte Anwendung geeignet ist.

Im Rahmen der vorliegenden Erfindung ist es bevorzugt, dass bei der Herstellung des Formkörpers mindestens ein geeignetes Bindermaterial verwendet wird. Im Rahmen dieser bevorzugten Ausführungsform wird weiter bevorzugt ein Gemisch aus Gerüstsilikat und dem mindestens einen Bindemittel hergestellt.

Demgemäß beschreibt die vorliegende Erfindung auch ein Verfahren zur Herstellung eines Formkörpers, enthaltend ein wie oben beschriebenes Gerüstsilikat, umfassend den Schritt
(I) Herstellen eines Gemischs, enthaltend ein wie oben beschriebenes Gerüstsilikat oder ein Gerüstsilikat, erhältlich gemäß eines wie oben beschriebenen Verfahrens, und mindestens ein Bindermaterial.

Als Bindemittel sind generell sämtliche Verbindungen geeignet, die eine über die ohne Bindemittel gegebenenfalls vorhandene Physisorption hinausreichende Adhäsion und/oder Kohäsion zwischen den zu bindenden Teilchen des Gerüstsilikats vermittelt. Beispiele für solche Bindemittel sind etwa Metalloxide wie beispielsweise SiO₂, Al₂O₃, TiO₂, ZrO₂ oder MgO oder Tone oder Gemische aus zwei oder mehr dieser Verbindungen.

Als Al₂O₃-Bindemittel sind insbesondere Tonmineralien und natürlich vorkommende oder künstlich hergestellte Aluminiumoxide wie beispielsweise alpha-, beta-, gamma-, delta-, eta-, kappa-, chi- oder theta-Aluminiumoxid sowie deren anorganische oder metallorganische Vorläuferverbindungen wie beispielsweise Gibbsit, Bayerit, Boehmit, Pseudoboehmit oder Trialkoxyaluminate wie beispielsweise Aluminiumtriisopropylat bevorzugt. Weitere bevorzugte Bindemittel sind amphiphile Verbindungen mit einem polaren und einem nichtpolaren Anteil sowie Graphit. Weitere Bindemittel sind etwa Tone wie etwa Montmorillonite, Kaoline, Bentonite, Halloysite, Dickite, Nacrite oder Anaxite.

Diese Bindemittel können als solche eingesetzt werden. Ebenso ist es im Rahmen der vorliegenden Erfindung auch möglich, Verbindungen einzusetzen, aus denen in mindestens einem weiteren Schritt bei der Herstellung der Formkörper das Bindemittel gebildet wird. Beispiele für solche Bindemittelvorstufen sind etwa Tetraalkoxysilane, Tetraalkoxytitanate, Tetraalkoxyzirkonate oder ein Gemisch aus zwei oder mehr verschiedenen Tetraalkoxysilanen oder ein Gemisch aus zwei oder mehr verschiedenen Tetraalkoxytitanaten oder ein Gemisch aus zwei oder mehr verschiedenen Tetraalkoxyzirkonaten oder ein Gemisch aus mindestens einem Tetraalkoxysilan und mindestens einem Tetraalkoxytitanat oder aus mindestens einem Tetraalkoxysilan und mindestens einem Tetraalkoxyzirkonat oder aus mindestens einem Tetraalkoxytitanat und mindestens einem Tetraalkoxyzirkonat oder ein Gemisch aus mindestens einem Tetraalkoxysilan und mindestens einem Tetraalkoxytitanat und mindestens einem Tetraalkoxyzirkonat.

Ganz besonders bevorzugt sind im Rahmen der vorliegenden Erfindung Bindemittel, die entweder ganz oder teilweise aus SiO₂ bestehen oder eine Vorstufe zu SiO₂ darstellen, aus der in mindestens einem weiteren Schritt bei der Herstellung der Formkörper SiO₂ gebildet wird. In diesem Zusammenhang können sowohl kolloidales Siliciumdioxid als auch so genanntes "wet process"-Siliciumdioxid als auch so genanntes "dry process"-Siliciumdioxid eingesetzt werden. In diesen Fällen handelt es sich ganz besonders bevorzugt um amorphes Siliciumdioxid, wobei die Größe der Siliciumdioxidpartikel beispielsweise im Bereich von 5 bis 100 nm liegt und die Oberfläche der Siliciumdioxidpartikel im Bereich von 50 bis 500 m²/g liegt.

Kolloidales Siliciumdioxid, bevorzugt als alkalische und/oder ammoniakalische Lösung, weiter bevorzugt als ammoniakalische Lösung, ist unter anderem etwa kommerziell erhältlich als Ludox®, Syton®, Nalco® oder Snowtex®.

"Wet process"-Siliciumdioxid ist unter anderem etwa kommerziell erhältlich als Hi-Sil®, Ultrasil®, Vulcasil®, Santocel®, Valron-Estersil®, Tokusil® oder Nipsil®.

"Dry process"-Siliciumdioxid ist unter anderem etwa kommerziell erhältlich als Aerosil®, Reolosil®, Cab-O-Sil®, Fransil® oder ArcSilica®.

Unter anderem bevorzugt wird im Rahmen der vorliegenden Erfindung eine ammoniakalische Lösung von kolloidalem Siliciumdioxid.

Demgemäß beschreibt die vorliegende Erfindung auch einen Formkörper, wie oben beschrieben, zusätzlich enthaltend SiO₂ als Bindermaterial.

Ebenso betrifft die vorliegende Erfindung auch ein Verfahren, wie oben beschrieben, wobei das gemäß (I) eingesetzte Bindemittel ein SiO₂ enthaltendes oder bildendes Bindemittel ist.

Demgemäß beschreibt die vorliegende Erfindung auch ein Verfahren, wie oben beschrieben, wobei das Bindemittel ein kolloidales Siliciumdioxid ist.

Bevorzugt werden die Bindemittel in einer Menge eingesetzt, die zu letztlich resultierenden Formkörpern führt, deren Bindemittelgehalt im Bereich von bis zu 80 Gew.-% liegen, weiter bevorzugt im Bereich von 5 bis 80 Gew.-%, weiter bevorzugt im Bereich von 10 bis 70 Gew.-%, weiter bevorzugt im Bereich von 10 bis 60 Gew.-%, weiter bevorzugt im Bereich von 15 bis 50 Gew.-%, weiter bevorzugt im Bereich von 15 bis 45 Gew.-% und besonders bevorzugt im Bereich von 15 bis 40 Gew.-%, jeweils bezogen auf das Gesamtgewicht des letztlich resultierenden Formkörpers.

Der Begriff "letztlich resultierender Formkörper", wie er im Rahmen der vorliegenden Erfindung verwendet wird, bezeichnet einen Formkörper, wie er aus den wie unten beschriebenen Trocknungs- und Kalzinierungsstufen (IV) und/oder (V), bevorzugt (IV) und (V) und insbesondere bevorzugt (V) erhalten wird.

Das Gemisch aus Bindemittel oder Vorstufe zu einem Bindemittel und dem zeolithischen Material kann zur weiteren Verarbeitung und zur Ausbildung einer plastischen Masse mit mindestens einer weiteren Verbindung versetzt werden. Unter anderem bevorzugt sind hier Porenbildner zu nennen.

Als Porenbildner können im erfindungsgemäßen Verfahren sämtliche Verbindungen eingesetzt werden, die bezüglich des fertigen Formkörpers eine bestimmte Porengröße und/oder eine bestimmte Porengrößenverteilung und/oder bestimmte Porenvolumina bereitstellt.

Bevorzugt werden als Porenbildner im erfindungsgemäßen Verfahren Polymere eingesetzt, die in Wasser oder in wässrigen Lösungsmittelgemischen dispergier-, suspendier- oder emulgierbar sind. Bevorzugte Polymere sind hierbei polymere Vinylverbindungen wie beispielsweise Polyalkylenoxide wie Polyethylenoxide, Polystyrol, Polyacrylate, Polymethacrylate, Polyolefine, Polyamide und Polyester, Kohlenhydrate wie etwa Cellulose oder Cellulosederivate, wie beispielsweise Methylcellulose, oder Zucker oder Naturfasern. Weitere geeignete Porenbildner sind etwa Pulp oder Graphit.

Werden bei der Herstellung des Gemischs gemäß (I) Porenbildner eingesetzt, so liegt der Gehalt des Gemischs gemäß (I) an Porenbildner, bevorzugt Polymer bevorzugt im Bereich von 5 bis 90 Gew.-%, bevorzugt im Bereich von 15 bis 75 Gew.-% und besonders bevorzugt im Bereich von 25 bis 55 Gew.-%, jeweils bezogen auf die Menge an erfindungsgemäßem Gerüstsilikat im Gemisch gemäß (I).

Sollte dies für die zu erzielende Porengrößenverteilung erwünscht sein, kann auch ein Gemisch aus zwei oder mehr Porenbildnern eingesetzt werden.

Die Porenbildner werden in einer besonders bevorzugten Ausführungsform des erfindungsgemäßen Verfahrens, wie untenstehend beschrieben, in einem Schritt (V) durch Calcinieren unter Erhalt des porösen Formkörpers entfernt. Gemäß einer bevorzugten Ausführungsform des erfindungsgemäßen Verfahrens werden dabei Formkörper erhalten, die Poren, bestimmt gemäß DIN 66134, im Bereich von mindestens 0,6 ml/g, bevorzugt im Bereich von 0,6 bis 0,8 ml/g und insbesondere bevorzugt im Bereich von mehr als 0,6 ml/g bis 0,8 ml/g aufweisen.

Die spezifische Oberfläche des erfindungsgemäßen Formkörpers, bestimmt gemäß DIN 66131, liegt im Allgemeinen bei mindestens 350 m²/g, bevorzugt bei mindestens 400 m²/g und insbesondere bevorzugt bei mindestens 425 m²/g. Beispielsweise kann die spezifische Oberfläche im Bereich von 350 bis 500 m²/g oder 400 bis 500 m²/g oder 425 bis 500 m²/g liegen.

Demgemäß beschreibt die vorliegende Erfindung auch einen Formkörper, wie oben beschrieben, mit einer spezifischen Oberfläche von mindestens 350 m²/g, enthaltend Poren mit einem Porenvolumen von mindestens 0,6 ml/g.

Bei der Herstellung des Gemisches gemäß (I) wird im Rahmen einer ebenfalls bevorzugten Ausführungsform des erfindungsgemäßen Verfahrens mindestens ein Anteigungsmittel zugegeben.

Als Anteigungsmittel können alle dafür geeigneten Verbindungen verwendet werden. Vorzugsweise sind dies organische, insbesondere hydrophile Polymere wie beispielsweise Cellulose, Cellulosederivate wie beispielsweise Methylcellulose, Stärke wie beispielsweise Kartoffelstärke, Tapetenpflaster, Polyacrylate, Polymethacrylate, Polyvinylalkohol, Polyvinylpyrrolidon, Polyisobuten oder Polytetrahydrofuran.

Insbesondere können demgemäß als Anteigungsmittel Verbindungen eingesetzt werden, die auch als Porenbildner wirken.

Diese Anteigungsmittel werden in einer besonders bevorzugten Ausführungsform des erfindungsgemäßen Verfahrens, wie untenstehend beschrieben, in einem Schritt (V) durch Calcinieren unter Erhalt des porösen Formkörpers entfernt.

Gemäß einer weiteren Ausführungsform der vorliegenden Erfindung wird bei der Herstellung des Gemisches gemäß (I) mindestens ein saurer Zusatzstoff zugesetzt. Ganz besonders bevorzugt sind organische saure Verbindungen, die sich in dem bevorzugten Schritt (V), wie untenstehend beschrieben, durch Calcinieren entfernen lassen. Besonders bevorzugt sind Carbonsäuren wie beispielsweise Ameisensäure, Oxalsäure und/oder Citronensäure. Ebenso ist es möglich, zwei oder mehr dieser saueren Verbindungen einzusetzen.

Die Zugabereihenfolge der Bestandteile des das Gerüstsilikat enthaltenden Gemischs gemäß (I) ist nicht kritisch. Es ist sowohl möglich, zuerst das mindestens eine Bindemittel zuzugeben, anschließend den mindestens einen Porenbildner, die mindestens eine saure Verbindung und zum Schluss das mindestens eine Anteigungsmittel, als auch die Reihenfolge bezüglich des mindestens einen Bindemittels, des mindestens einen Porenbildners, der mindestens einen sauren Verbindung und des mindestens einen Anteigungsmittels zu vertauschen.

Nach der Zugabe des Bindemittels zum Gerüstsilikat-Feststoff, dem gegebenenfalls mindestens eine der oben beschriebenen Verbindungen bereits zugegeben worden war, wird das Gemisch gemäß (I) in der Regel 10 bis 180 Minuten homogenisiert. Besonders bevorzugt werden zur Homogenisierung unter anderem Kneter, Koller oder Extruder eingesetzt. Bevorzugt wird das Gemisch geknetet. Im industriellen Maßstab wird zur Homogenisierung bevorzugt gekollert.

Demgemäß beschreibt die vorliegende Erfindung auch ein Verfahren, wie oben beschrieben, umfassend die Schritte
(I) Herstellen eines Gemischs, enthaltend ein wie oben beschriebenes Gerüstsilikat oder ein Gerüstsilikat, erhältlich gemäß einem wie oben beschriebenen Verfahren, und mindestens ein Bindermaterial;
(II) Kneten des Gemischs.

Bei der Homogenisierung wird in der Regel bei Temperaturen im Bereich von ungefähr 10 °C bis zum Siedepunkt des Anteigungsmittels und Normaldruck oder leichtem überatmosphärischem Druck gearbeitet. Danach kann gegebenenfalls mindestens eine der oben beschriebenen Verbindungen zugegeben werden. Das so erhaltene Gemisch wird solange homogenisiert, vorzugsweise geknetet, bis eine verstrangbare plastische Masse entstanden ist.

Das homogenisierte Gemisch wird gemäß einer weiter bevorzugten Ausführungsform der vorliegenden Erfindung verformt.

Im Rahmen der vorliegenden Erfindung sind für die Verfahren im Rahmen der Formgebung solche Verfahren bevorzugt, bei denen die Verformung durch Extrusion in üblichen Extrudern, beispielsweise zu Strängen mit einem Durchmesser von bevorzugt 1 bis 10 mm und besonders bevorzugt 2 bis 5 mm, erfolgt. Derartige Extrusionsvorrichtungen werden beispielsweise in Ullmann's Enzyklopädie der Technischen Chemie, 4. Auflage, Bd. 2, S. 295 ff., 1972 beschrieben. Neben der Verwendung eines Extruders wird ebenfalls vorzugsweise eine Strangpresse zur Verformung verwendet.

Prinzipiell können jedoch zur Formgebung alle bekannten und/oder geeigneten Knet- und Verformungsvorrichtungen bzw. Verfahren eingesetzt werden. Unter anderem sind hierbei zu nennen:
(i) Brikettieren, d.h. mechanisches Verpressen mit oder ohne Zusatz von zusätzlichem Bindermaterial;
(ii) Pelletieren, d.h. Kompaktieren durch kreisförmige und/oder rotierende Bewegungen;
(iii) Sintern, d.h. das zu verformende Materials wird einer thermischen Behandlung ausgesetzt.

Beispielsweise kann die Formgebung aus der folgenden Gruppe ausgewählt sein, wobei die Kombination von mindestens zwei dieser Methoden explizit eingeschlossen ist: Brikettieren durch Stempelpressen, Walzenpressen, Ringwalzenpressen, Brikettieren ohne Bindemittel; Pelletieren, Schmelzen, Spinning-Techniken, Abscheidung, Schäumen, Sprühtrocknen; Brennen im Schachtofen, Konvektionsofen, Wanderrost, Drehrohrofen, Kollern.

Das Kompaktieren kann bei Umgebungsdruck oder bei gegenüber dem Umgebungsdruck erhöhtem Druck stattfinden, beispielsweise in einem Druckbereich von 1 bar bis zu mehreren hundert bar. Weiterhin kann das Kompaktieren bei Umgebungstemperatur oder bei gegenüber der Umgebungstemperatur erhöhter Temperatur stattfinden, beispielsweise in einem Temperaturbereich von 20 bis 300 °C. Ist Trocknen und/oder Brennen Bestandteil des Formgebungsschritt, so sind Temperaturen bis zu 600 °C denkbar. Schließlich kann das Kompaktieren in der Umgebungs-Atmosphäre stattfinden oder in einer kontrollierten Atmosphäre. Kontrollierte Atmosphären sind beispielsweise Schutzgas-Atmosphären, reduzierende und/oder oxidierende Atmosphären.

Demgemäß beschreibt die vorliegende Erfindung auch ein Verfahren zur Herstellung eines Formkörpers, wie oben beschrieben, umfassend die Schritte
(I) Herstellen eines Gemischs, enthaltend ein wie oben beschriebenes Gerüstsilikat oder ein Gerüstsilikat, erhältlich gemäß einem wie oben beschriebenen Verfahren, und mindestens ein Bindermaterial;
(II) Kneten des Gemischs;
(III) Verformen des gekneteten Gemischs unter Erhalt mindestens eines Formkörpers.

Die Form der erfindungsgemäß hergestellten Formkörper kann beliebig gewählt werden. Insbesondere sind unter anderem Kugeln, ovale Formen, Zylinder oder Tabletten möglich.

Besonders bevorzugt wird im Rahmen der vorliegenden Erfindung das Verformen durch Extrusion des gemäß (II) erhaltenen gekneteten Gemischs durchgeführt, wobei als Extrudate weiter bevorzugt im wesentlichen zylinderförmige Stränge mit einem Durchmesser im Bereich von 1 bis 20 mm, bevorzugt im Bereich von 1 bis 10 mm, weiter bevorzugt im Bereich von 2 bis 10 mm und weiter bevorzugt im Bereich von 2 bis 5 mm erhalten werden.

Dem Schritt (III) schließt sich im Rahmen der vorliegenden Erfindung bevorzugt mindestens ein Trocknungsschritt an. Dieser mindestens eine Trocknungsschritt erfolgt dabei bei Temperaturen im Bereich von im Allgemeinen 80 bis 160 °C, bevorzugt von 90 bis 145 °C und besonders bevorzugt von 100 bis 130 °C, wobei die Trocknungsdauer im Allgemeinen bei 6 h oder mehr, beispielsweise im Bereich von 6 bis 24 h, liegt. Es sind jedoch in Abhängigkeit vom Feuchtigkeitsgehalt des zu trocknenden Materials auch kürzere Trockenzeit wie beispielsweise ungefähr 1, 2, 3, 4, oder 5 h möglich.

Vor und/oder nach dem Trocknungsschritt kann das bevorzugt erhaltene Extrudat beispielsweise zerkleinert werden. Dabei wird vorzugsweise ein Granulat oder Splitt mit einem Partikeldurchmesser von 0,1 bis 5 mm, insbesondere 0,5 bis 2 mm erhalten.

Demgemäß beschreibt die vorliegende Erfindung auch ein Verfahren zur Herstellung eines Formkörpers, wie oben beschrieben, umfassend die Schritte
(I) Herstellen eines Gemischs, enthaltend ein wie oben beschriebenes Gerüstsilikat oder ein Gerüstsilikat, erhältlich gemäß einem wie oben beschriebenen Verfahren, und mindestens ein Bindermaterial;
(II) Kneten des Gemischs;
(III) Verformen des gekneteten Gemischs unter Erhalt mindestens eines Formkörpers;
(IV) Trocknen des mindestens einen Formkörpers.

Dem Schritt (IV) schließt sich im Rahmen der vorliegenden Erfindung bevorzugt mindestens ein Calcinierungsschritt an. Die Calcinierung wird bei Temperaturen im Bereich von im allgemeinen 350 bis 750 °C und bevorzugt von 450 bis 600 °C durchgeführt.

Die Calcinierung kann unter jeder geeigneten Gasatmosphäre erfolgen, wobei Luft und/oder Magerluft bevorzugt sind. Weiter wird die Calcinierung bevorzugt in einem Muffelofen, einem Drehrohrofen und/oder einem Bandkalzinierofen durchgeführt, wobei die Calcinierungsdauer im Allgemeinen bei 1 h oder mehr, beispielsweise im Bereich von 1 bis 24 h oder im Bereich von 3 bis 12 h liegt. Demgemäß ist es im Rahmen erfindungsgemäßen Verfahrens beispielsweise möglich, den Formkörper einmal, zweimal oder öfter für jeweils mindestens 1 h wie beispielsweise jeweils im Bereich von 3 bis 12 h zu calcinieren, wobei die Temperaturen während eines Calcinierungsschrittes gleich bleiben oder kontinuierlich oder diskontinuierlich geändert werden können. Wird zweimal oder öfter calciniert, können sich die Calcinierungstemperaturen in den einzelnen Schritten unterscheiden oder gleich sein.

Demgemäß betrifft die vorliegende Erfindung auch ein Verfahren zur Herstellung eines Formkörpers, wie oben beschrieben, umfassend die Schritte
(I) Herstellen eines Gemischs, enthaltend ein wie oben beschriebenes Gerüstsilikat oder ein Gerüstsilikat, erhältlich gemäß einem wie oben beschriebenen Verfahren, und mindestens ein Bindermaterial;
(II) Kneten des Gemischs;
(III) Verformen des gekneteten Gemischs unter Erhalt mindestens eines Formkörpers;
(IV) Trocknen des mindestens einen Formkörpers;
(V) Calcinieren des mindestens einen getrockneten Formkörpers.

Nach dem Calcinierungsschritt kann das calcinierte Material beispielsweise zerkleinert werden. Dabei wird vorzugsweise ein Granulat oder Splitt mit einem Partikeldurchmesser von 0,1 bis 5 mm, insbesondere 0,5 bis 2 mm erhalten.

Vor und/oder nach dem Trocknen und/oder vor und/oder nach dem Calcinieren kann der mindestens eine Formkörper gegebenenfalls mit einer konzentrierten oder verdünnten Broenstedt-Säure oder einem Gemisch aus zwei oder mehr Broenstedt-Säuren behandelt werden. Geeignete Säuren sind beispielsweise Salzsäure, Schwefelsäure, Phosphorsäure, Salpetersäure oder Carbonsäuren, Dicarbonsäuren oder Oligo- oder Polycarbonsäuren wie beispielsweise Nitrilotriessigsäure, Sulfosalicylsäure oder Ethylendiaminotetraessigsäure.

Gegebenenfalls schließt sich an diese mindestens eine Behandlung mit mindestens einer Broenstedtsäure mindestens ein Trockenschritt und/oder mindestens ein Calcinierungsschritt an, der jeweils unter den oben beschriebenen Bedingungen durchgeführt wird.

Gemäß einer weiteren Ausführungsform des erfindungsgemäßen Verfahrens können die erfindungsgemäß erhaltenen Formkörper zur besseren Härtung einer Wasserdampfbehandlung unterzogen werden, nach der bevorzugt nochmals mindestens einmal getrocknet und/oder mindestens einmal calciniert wird. Beispielsweise wird nach mindestens einem Trockenschritt und mindestens einem nachfolgenden Calcinierschritt der calcinierte Formkörper der Wasserdampfbehandlung unterzogen und anschließend nochmals mindestens einmal getrocknet und/oder mindestens einmal calciniert.

Die erfindungsgemäß erhaltenen Formkörper weisen Härten auf, die im Allgemeinen im Bereich von 2 bis 15 N, bevorzugt im Bereich von 5 bis 15 N und besonders bevorzugt im Bereich von 10 bis 15 N liegen.

Demgemäß betrifft die vorliegende Erfindung auch einen Formkörper, wie oben beschrieben, mit einer Schneidhärte im Bereich von 2 bis 15 N.

Die obenstehend beschriebene Härte wurde im Rahmen der vorliegenden Erfindung an einem Apparat der Firma Zwick, Typ BZ2.5/TS1S mit einer Vorkraft von 0,5 N, einer Vorkraftschubgeschwindigkeit von 10 mm/min und einer nachfolgenden Prüfgeschwindigkeit von 1,6 mm/min bestimmt. Das Gerät besaß einen festsitzenden Drehteller und einen frei beweglichen Stempel mit eingebauter Schneide von 0,3 mm Stärke. Der bewegliche Stempel mit der Schneide war mit einer Kraftmessdose zur Kraftaufnahme verbunden und bewegte sich während der Messung gegen den festsitzenden Drehteller hin, auf der der zu untersuchende Katalysatorformkörper lag. Das Prüfgerät wurde über einen Computer gesteuert, der die Messergebnisse registrierte und auswertete. Die erzielten Werte stellen den Mittelwert aus den Messungen zu jeweils 10 Katalysatorformkörpern dar. Die Katalysatorformkörper wiesen eine zylindrische Geometrie auf, wobei ihre mittlere Länge in etwa dem Zwei- bis Dreifachen des Durchmessers entsprach, und wurden dabei mit der Schneide von 0,3 mm Stärke mit zunehmender Kraft solange belastet, bis der Formkörper durchtrennt war. Die Schneide wurde dabei senkrecht zur Längsachse des Formkörpers auf den Formkörper aufgebracht. Die dazu benötigte Kraft ist die Schneidhärte (Einheit N).

Die vorliegende Erfindung betrifft darüber hinaus die Verwendung der erfindungsgemäßen Silikate, insbesondere der erfindungsgemäßen Gerüstsilikate und/oder der erfindungsgemäßen Formkörper, als Molekularsieb, Katalysator, Katalysatorträger oder deren Binder, als Adsorptionsmittel, Pigmente, Zusatzstoffe in Waschmitteln, Zusatz zu Baustoffen, zur Thioxotropierung in Farbpasten und Lacken, sowie Anwendungen als Gleit- und Schmierstoff, als Flammschutz, Hilfs- und Füllstoff in Papiererzeugnissen, in bakterizid und/oder fungizid und/oder herbizid wirksamen Zusammensetzungen, zum lonenaustausch, zur Herstellung von Keramiken, in Polymeren, in elektrischen, optischen oder elektrooptischen Bauteilen und Schaltelementen oder Sensoren.

Reaktionen, die durch die erfindungsgemäßen Silikate katalysiert werden können, sind beispielsweise Hydrierungen, Dehydrierungen, Oxidehydrierungen, Oxidationen, Epoxidationen, Polymerisationsreaktionen, Aminierungen, Hydratisierungen und Dehydratisierungen, nukleophile und elektrophile Substitutionsreaktionen, Additions- und Eliminationsreaktionen, Doppelbindungs- und Skelettisomerisierungen, Dehydrocyclisierungen, Hydroxylierungen von Heteroaromaten, Epoxid-Aldehydumlagerungen, Metathese, Olefinherstellung aus Methanol, Diels-Alder-Reaktionen, Knüpfung von Kohlenstoff-Kohlenstoff-Bindungen wie beispielsweise der Olefin-Dimerisierung oder Olefin-Trimerisierung sowie Kondensationsreaktionen vom Typ der Aldolkondensationen. Abhängig vom umzusetzenden Molekül können die katalytischen Reaktionen in Gas- oder Flüssigphase oder aber auch in überkritischer Phase durchgeführt werden.

Insbesondere eignen sich die erfindungsgemäßen Silikate auch als Molekularsieb. Hierbei kann man vorteilhafterweise die hohe innere Oberfläche des erfindungsgemäßen Materials ausnutzen, aber auch Moleküle aufgrund ihres Unterschieds in der Molekülgröße voneinander trennen. Je nach Trennaufgabe kann die jeweilige Adsorption in der Gasphase oder der Flüssigphase oder in überkritischer Phase erfolgen.

In einer ersten Ausführungsform eignen sich die erfindungsgemäßen Silikate zur Trennung von Konstitutionsisomeren, beispielsweise zur Trennung von n- und iso-Isomeren kleiner Moleküle. Unter dem Begriff "kleines Molekül" werden im Rahmen der vorliegenden Erfindung Moleküle mit einem kinetischen Durchmesser im Bereich von 3,5 bis 5,5 Å verstanden. Zur Definition des kinetischen Durchmessers sei auf D.W. Breck, Zeolite Molecular Sieves, 1974, J. Wiley, Seiten 634 - 641 verwiesen.

### Beispielhaft seien hierfür die Trennung von n- und i-Butan genannt

In einer zweiten Ausführungsform eignen sich die erfindungsgemäßen Silikate zur Trennung von Konfigurationsisomeren, beispielsweise zur Trennung von cis-Buten und trans-Buten.

Ganz allgemein betrifft die vorliegende Erfindung die Verwendung der erfindungsgemäßen Silikate, insbesondere der Gerüstsilikate, zur Abtrennung von mindestens einem Alkan und/oder mindestens einem Alken und/oder mindestens einem Alkin aus einem Stoffgemisch, enthaltend mindestens zwei Alkane oder mindestens zwei Alkene oder mindestens zwei Alkine oder mindestens ein Alkan und mindestens ein Alken oder mindestens ein Alkan und mindestens ein Alkin oder mindestens ein Alken und mindestens ein Alkin oder mindestens ein Alkan und mindestens ein Alken und mindestens eine Alkin, insbesondere zur Auftrennung von Konstitutionsisomeren und/oder Konfigurationsisomeren, wobei das mindestens eine Alkan und/oder mindestens eine Alken und/oder mindestens eine Alkin bis zu 10 C-Atome wie beispielsweise 1 C-Atom im Falle von Methan oder 2, 3, 4, 5, 6, 7, 8, 9 oder 10 C-Atome aufweist.

Bevorzugt betrifft die vorliegende Erfindung die Verwendung der erfindungsgemäßen Silikate, insbesondere der Gerüstsilikate, zur Abtrennung von mindestens einem Alkan und/oder mindestens einem Alken und/oder mindestens einem Alkin aus einem Gasgemisch, enthaltend mindestens zwei Alkane oder mindestens zwei Alkene oder mindestens zwei Alkine oder mindestens ein Alkan und mindestens ein Alken oder mindestens ein Alkan und mindestens ein Alkin oder mindestens ein Alken und mindestens ein Alkin oder mindestens ein Alkan und mindestens ein Alken und mindestens eine Alkin, insbesondere zur Auftrennung von Konstitutionsisomeren und/oder Konfigurationsisomeren .

Als besonders bevorzugte Einsatzgebiete sind hierbei die Auftrennung von Methan und Ethan oder zur Auftrennung von Ethen, Propen und Buten, insbesondere trans-2-Buten, oder zur Auftrennung von Butan und Buten oder zur Auftrennung von n-Butan und iso-Butan oder zur Auftrennung von 1-Buten und trans-2-Buten.

Die erfindungsgemäßen Silikate ermöglichen somit eine einfache Trennung von engsiedenden Stoffgemischen, die durch destillative Verfahren ohne große apparative Vorrichtungen oder ohne zur Hilfenahme von Zusatzstoffen nicht möglich ist. Hierdurch lassen sich Kosten in chemischen Produktionsverfahren reduzieren. In solchen Verfahren wird das erfindungsgemäße Gerüstsilikat als solches oder bevorzugt als Formkörper in mindestens einer geeigneten Vorrichtung wie beispielsweise einem Rohrrektor eingesetzt, durch den kontinuierlich oder diskontinuierlich, bevorzugt kontinuierlich das aufzutrennenden Stoffgemisch geleitet wird.

Demgemäß betrifft die vorliegende Erfindung auch eine Vorrichtung, insbesondere einen Rohrreaktor, enthaltend mindestens ein wie oben beschriebenes Gerüstsilikat und/oder einen wie oben beschriebenen Formkörper zur Auftrennung eines Stoffgemischs, insbesondere zur Abtrennung von mindestens einem Alkan und/oder mindestens einem Alken und/oder mindestens einem Alkin aus einem Gasgemisch enthaltend mindestens zwei Alkane oder mindestens zwei Alkene oder mindestens zwei Alkine oder mindestens ein Alkan und mindestens ein Alken oder mindestens ein Alkan und mindestens ein Alkin oder mindestens ein Alken und mindestens ein Alkin oder mindestens ein Alkan und mindestens ein Alken und mindestens eine Alkin.

Gemäß einer insbesondere bevorzugten Ausführungsform weist ein solcher Rohrreaktor ein Verhältnis von Länge : Breite von größer oder gleich, bevorzugt größer 3 : 1 auf.

Ebenso kann das erfindungsgemäße oder erfindungsgemäß hergestellte Silikat, insbesondere das Gerüstsilikat, oder ein Formkörper, der dieses Silikat enthält, beispielsweise
- zur Trennung von Olefin und Kohlendioxid, beispielsweise zur Reinigung von Polyethylen oder Polypropylen,
- oder als Katalysator zur Aminierung, wie beispielsweise zur Herstellung von Methylamin und/oder Dimethylamin aus Methanol und Ammoniak oder aus Synthesegas und Ammonaik, wobei bevorzugt ein geringer Anteil an Trimethylamin erzeugt wird,
- oder für Polymerisationen wie beispielsweise zur Herstellung von Polytetrahydrofuran aus Tetrahydrofuran,
- oder als Hydroxylierungskatalyator wie beispielsweise zur Herstellung von Phenol aus Benzol,
- oder allgemein zu Umsetzungsreaktionen mit 6-Ring-Aromaten,
- oder zur Umsetzung von Cyclohexanon zu Cycolhexanonoxim,
- oder für Beckmann-Umlagerungen wie beispielsweise zur Umsetzung von Cyclohexanonoxim zu Caprolcatam
verwendet werden. Überraschenderweise wurde gefunden, dass das neue Material, insbesondere das neue Gerüstsilikat der Struktur RUB-41, eine sehr hohe Aufnahmefähigkeit für 6-Ring-Aromaten bzw. -Heteroaromaten, insbesondere für Benzol, hat. Demgemäß ist beabsichtigt, das neue Material auch für die Abtrennung von Benzol aus Benzol enthaltenden Gemischen zu verwenden.

Wird das erfindungsgemäße Gerüstsilikat oder der dieses Gerüstsilikat enthaltende Formkörper als Adsorbens, beispielsweise zur Stofftrennung, verwendet, so kann die Desorption der adsorbierten Verbindung oder der adsorbierten Verbindungen entweder durch eine geeignete Reduktion des Drucks und/oder einen geeigneten Temperaturwechsel wie besonders bevorzugt durch eine geeignete Temperaturerhöhung und/oder durch Inkontaktbringen des Gerüstsilikats oder des dieses Gerüstsilikat enthaltenden Formkörpers mit mindestens einer Verbindung, die stärker adsorbiert als die zu desorbierende Verbindung oder zu desorbierenden Verbindungen, bewerkstelligt werden.

Je nach Verwendungsweise des erfindungsgemäßen Gerüstsilikates kann es erforderlich sein, nach einer bestimmten Einsatzzeit das Gerüstsilikat oder den das Gerüstsilikat enthaltenden Formkörper zu regenerieren.

In einer weiteren Ausführungsform des erfindungsgemäßen Verfahrens werden das Gerüstsilikat und/oder die Formkörper nach ihrem Einsatz in dem jeweiligen technischen Gebiet durch ein Verfahren regeneriert, bei dem die Regenerierung durch gezieltes Abbrennen der für die abnehmende Performance verantwortlichen Beläge erfolgt. Dabei wird bevorzugt in einer Inertgasatmosphäre gearbeitet, die genau definierte Mengen an Sauerstoff liefernden Substanzen enthält. Ein solches Regenerierungsverfahren ist unter anderem in der WO 98/55228 und der DE 197 23 949 A1, insbesondere in Spalte 2, Zeilen 33 bis 54 der DE 197 23 949 A1, beschrieben, deren diesbezügliche Offenbarung durch Bezugnahme hiermit vollumfänglich in den Gegenstand der vorliegenden Anmeldung einbezogen wird.

Das zu regenerierende Gerüstsilikat und/oder die Formkörper werden entweder in der Vorrichtung, beispielsweise dem Rohrreaktor, oder in einem externen Ofen in einer Atmosphäre, die 0,1 bis ungefähr 20 Volumen-Anteile von Sauerstoff liefernden Substanzen, besonders bevorzugt 0,1 bis 20 Volumenanteile Sauerstoff, enthält, auf eine Temperatur im Bereich von 250 °C bis 600 °C, vorzugsweise von 400 °C bis 550 °C und insbesondere von 450 °C bis 500 °C aufgeheizt. Dabei wird das Aufheizen vorzugsweise mit einer Aufheizrate von 0,1 °C/min bis 20 °C/min, vorzugsweise von 0,3 °C/min bis 15 °C/min und insbesondere von 0,5 °C/min bis 10 °C/min durchgeführt.

Während dieser Aufheizphase wird bis zu einer Temperatur aufgeheizt, bei der sich die meisten organischen Beläge zu zersetzen beginnen, während gleichzeitig die Temperatur über den Sauerstoffgehalt geregelt wird und somit nicht derart ansteigt, dass es zu Schädigungen der Gerüstsilikat- und/oder Formkörperstruktur kommt. Das langsame Erhöhen der Temperatur bzw. das Verweilen bei niedriger Temperatur durch Einstellen des entsprechenden Sauerstoffgehaltes und der entsprechenden Heizleistung ist bei hohen organischen Beladungen ein wesentlicher Schritt zur Verhinderung einer lokalen Überhitzung des Gerüstsilikats und/oder der Formkörper.

Sinkt die Temperatur des Abgasstroms am Reaktorausgang trotz steigender Mengen an Sauerstoff liefernden Substanzen im Gasstrom, so ist das Abbrennen der organischen Beläge beendet. Die Dauer der Behandlung beträgt im Allgemeinen jeweils 1 bis 30, vorzugsweise ungefähr 2 bis ungefähr 20 und insbesondere ungefähr 3 bis ungefähr 10 Stunden.

Das anschließende Abkühlen des so regenerierten Gerüstsilikats und/oder der Formkörper wird bevorzugt so durchgeführt, dass das Abkühlen nicht zu schnell erfolgt, da sonst die mechanische Festigkeit beispielsweise der Formkörper negativ beeinflusst werden kann.

Es kann erforderlich sein, nach der durchgeführten Regeneration durch Calcinieren, wie oben beschrieben, eine Spülung mit Wasser und/oder verdünnten Säuren wie beispielsweise Salzsäure anzuschließen, um die durch Verunreinigung der Edukte gegebenenfalls verbleibende anorganische Beladung (Alkalispuren etc.) zu entfernen. Anschließend kann eine erneute Trocknung und/oder ein erneutes Calcinieren durchgeführt werden.

Gemäß einer weiteren Ausführungsform des erfindungsgemäßen Verfahrens können das für das jeweilige technische Einsatzgebiet zumindest teilweise deaktivierte Gerüstsilikat und/oder die Formkörper vor dem Aufheizen gemäß der Regenerationsprozedur mit einem Lösungsmittel im Umsetzungsreaktor oder in einem externen Reaktor gewaschen werden, um noch anhaftendes Wertprodukt zu entfernen. Dabei wird das Waschen so durchgeführt, dass zwar die jeweils anhaftenden Wertprodukte entfernt werden können, Temperatur und Druck aber nicht so hoch gewählt werden, dass die meist organischen Beläge ebenfalls entfernt werden. Vorzugsweise wird dabei mit einem geeigneten Lösungsmittel lediglich gespült. Somit eignen sich für diesen Waschvorgang alle Lösungsmittel, in denen sich das jeweilige Wertprodukt gut löst. Die benutzte Menge an Lösungsmittel sowie die Dauer des Waschvorgangs sind nicht kritisch. Der Waschvorgang kann mehrmals wiederholt und bei erhöhter Temperatur durchgeführt werden. Bei Verwendung von CO₂ als Lösungsmittel ist überkritischer Druck bevorzugt, ansonsten kann der Waschvorgang unter Normaldruck bzw. erhöhtem oder überkritischem Druck erfolgen. Nach der Beendigung des Waschvorgangs wird im Allgemeinen getrocknet. Obwohl der Trocknungsvorgang im allgemeinen unkritisch ist, sollte die Trocknungstemperatur die Siedetemperatur des zum Waschen verwendeten Lösungsmittels nicht zu stark übersteigen, um ein schlagartiges Verdampfen des Lösungsmittels in den Poren, insbesondere in den Mikroporen zu vermeiden, da auch dies zu Schädigungen der Gitterstruktur führen kann.

Zur Prozessoptimierung können mindestens zwei Vorrichtungen verwendet werden, die jeweils das erfindungsgemäße Gerüstsilikat und/oder die Formkörper enthalten, wobei im Falle der Regeneration mindestens eine Vorrichtung aus dem Betrieb genommen wird und mindestens eine Vorrichtung im Betrieb verbleibt, so dass der Prozess zu keinem Zeitpunkt unterbrochen werden muss.

Die vorliegende Erfindung wird anhand der nachfolgend beschriebenen Beispiele, Abbildungen und Tabellen näher erläutert.

### Beschreibung der Abbildungen

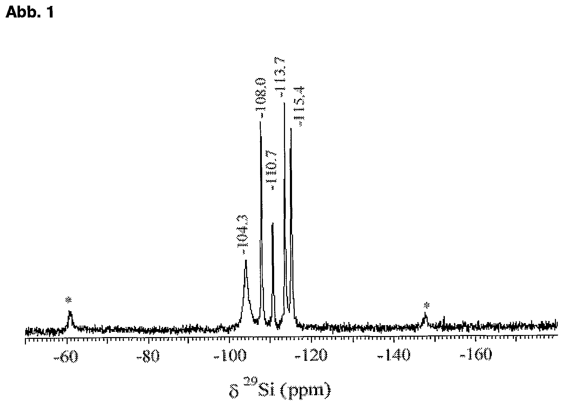

- Abbildung 1: zeigt das 29-Si MAS NMR-Spektrum des gemäß Beispiel 2 erhaltenen getrockneten Schichtsilikates der Struktur RUB-39. Als Standard wurde TMS verwendet. Das Festkörper-NMR-Spektrum wurde mit einem Bruker ASX 400 unter Verwendung eines herkömmlichen 7 mm Bruker-Probenkopfes aufgenommen. Die Proben wurden bei Raumtemperatur um den magischen Winkel mit ungefähr 5 kHz spinning speed rotiert. Für das quantitative Spektrum wurde das HP DEC (high power decoupled) Puls-Programm (pulse program) verwendet.

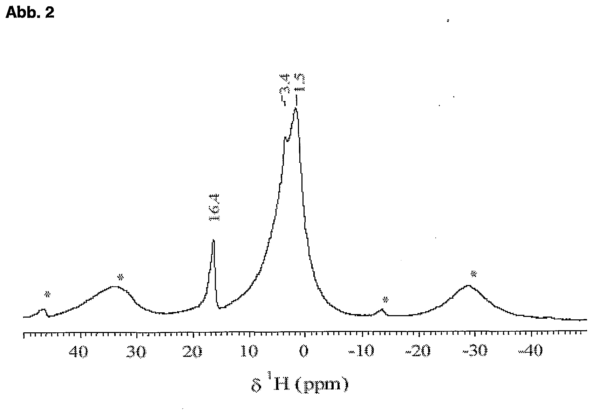

- Abbildung 2: zeigt das 1-H NMR-Spektrum des gemäß Beispiel 2 erhaltenen getrockneten Schichtsilikates der Struktur RUB-39. Als Standard wurde TMS verwendet. Das Festkörper-NMR-Spektrum wurde mit einem Bruker ASX 400 unter Verwendung eines herkömmlichen 4 mm Bruker-Probenkopfes aufgenommen. Die Proben wurden bei Raumtemperatur um den magischen Winkel mit ungefähr 12 kHz spinning speed rotiert. Für das quantitative Spektrum wurde das Einzel-PulsProgramm (single pulse program) verwendet.

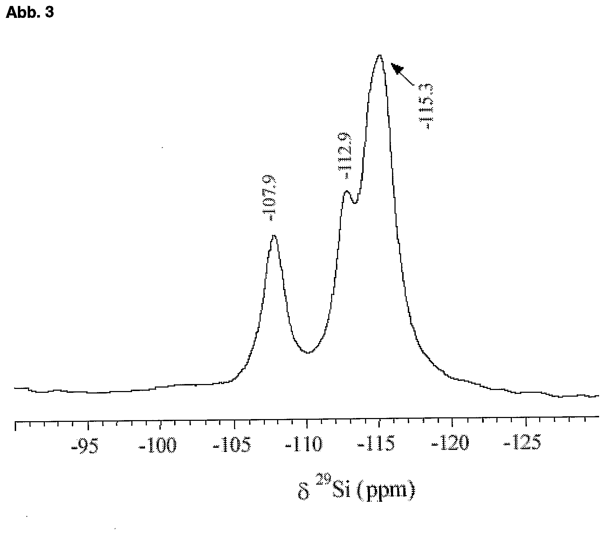

- Abbildung 3: zeigt das 29-Si MAS NMR-Spektrum des gemäß Beispiel 3 erhaltenen kalzinierten Gerüstsilikates der Struktur RUB-41. Als Standard wurde TMS verwendet. Das Festkörper-NMR-Spektrum wurde mit einem Bruker ASX 400 unter Verwendung eines herkömmlichen 7 mm Bruker-Probenkopfes aufgenommen. Die Proben wurden bei Raumtemperatur um den magischen Winkel mit ungefähr 5 kHz spinning speed rotiert. Für das quantitative Spektrum wurde das HP DEC (high power decoupled) Puls-Programm (pulse program) verwendet.

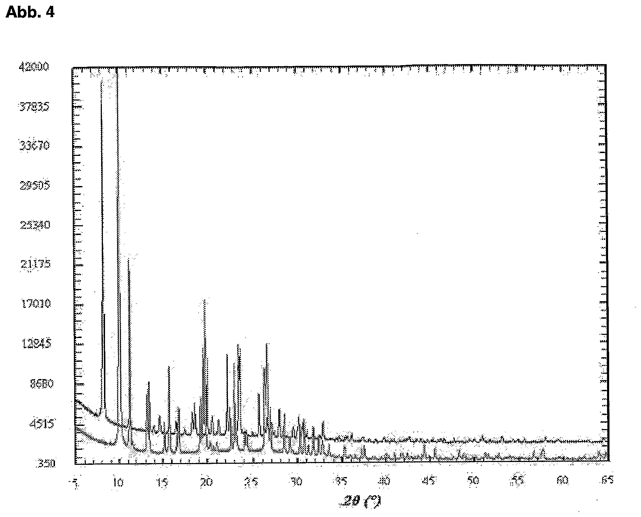

- Abbildung 4: zeigt die Röntgendiffraktogramme des gemäß Beispiel 2 erhaltenen getrockneten Schichtsilikates der Struktur RUB-39 (oben) und des gemäß Beispiel 3 erhaltenen kalzinierten Gerüstsilikates der Strukur RUB-41 (unten). Die Pulverröntgendiffraktogramme wurden auf einem Siemens D-5000 mit monochromatischer Cu K alpha-1Strahlung aufgenommen, wobei ein Kapillarprobenhalter zur Vermeidung einer bevorzugten Orientierung verwendet wurde. Die Diffraktionsdaten wurden mit einem positionssensitiven Detektor von Braun im Bereich von 8 bis 96 °(2Theta) und einer Schrittweite von 0,0678 ° gesammelt. Indizierung des Pulverdiagramms erfolgte mit dem Programm Treor90, implementiert in powder-X (Treor90 ist ein public domain-Programm, die frei zugänglich ist über die URL http://www.ch.iucr.org/sincris-top/logiciel/). In der Abbildung ist auf der Rechtswertachse der Winkel 2Theta in ° angegeben, auf der Hochwertachse sind die Intensitäten aufgetragen.

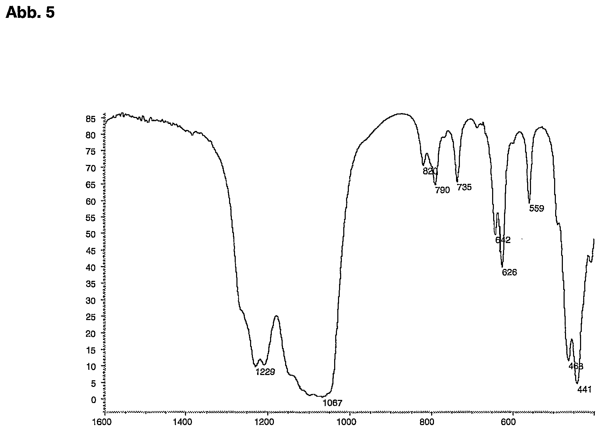

- Abbildung 5: zeigt das IR-Spektrum des gemäß Beispiel 3 erhaltenen kalzinierten Gerüstsilikates der Struktur RUB-41 im Bereich von 1600 bis 500 Wellenzahlen. Auf der Rechtswertachse sind die Wellenzahlen in der Einheit cm⁻¹ angegeben, auf der Hochwertachse die Transmission in %. Das IR-Diagramm wurde mit einem Nicolet Magna IR-560 aufgenommen.

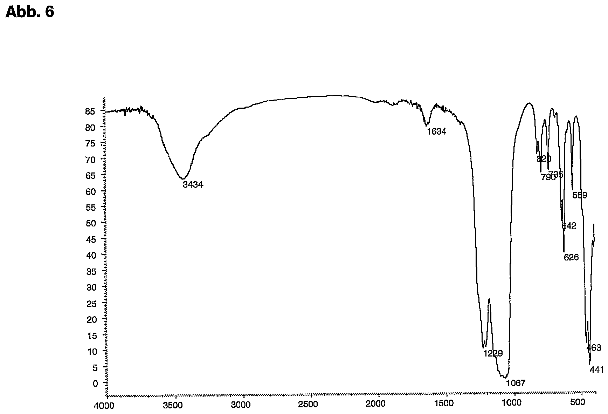

- Abbildung 6: zeigt das IR-Spektrum des gemäß Beispiel 3 erhaltenen kalzinierten Gerüstsilikates der Struktur RUB-41 im Bereich von 4000 bis 490 Wellenzahlen. Auf der Rechtswertachse sind die Wellenzahlen in der Einheit cm⁻¹ angegeben, auf der Hochwertachse die Transmission in %. Das IR-Diagramm wurde mit einem Nicolet Magna IR-560 aufgenommen.

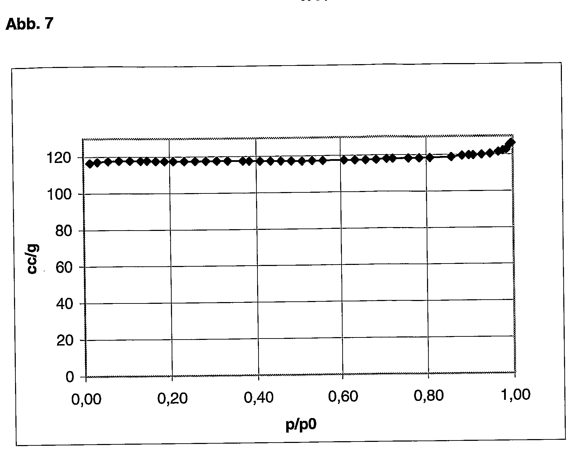

- Abbildung 7: zeigt die Stickstoffadsorptionsisotherme gemäß Beispiel 4(a). Auf der Rechswertachse ist der Relativdruck p/p⁰ aufgetragen, auf der Hochwertachse das gemäß DIN 66134 bei 77 K bestimmte Porenvolumen in ml/g (STP (standard pressure temperature)).

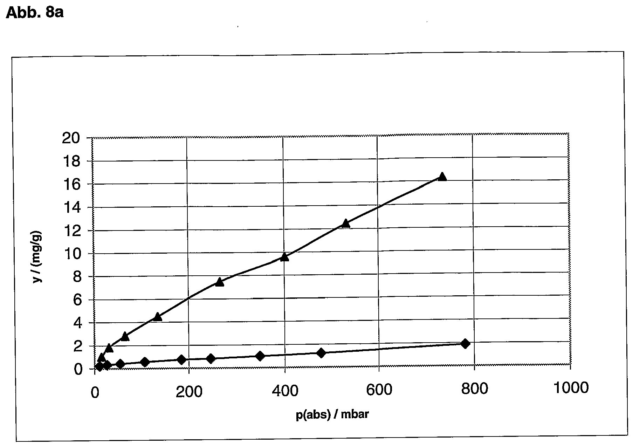

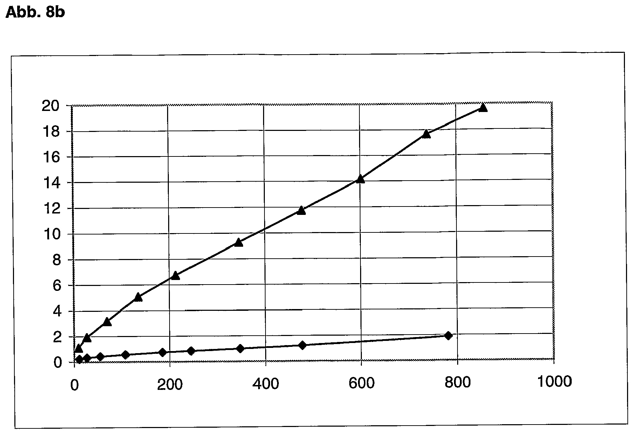

- Abbildungen 8a und 8b: zeigen die Adsorptionsisothermen gemäß Beispiel 4(b). Auf der Rechtswertachse ist jeweils der Absolutdruck p(abs) in mbar aufgetragen, auf der Hochwertachse jeweils die adsorbierte Menge an n-Butan (▲) beziehungsweise iso-Butan (◆), jeweils in der Einheit mg(Kohlenwasserstoff)/g(Zeolith).

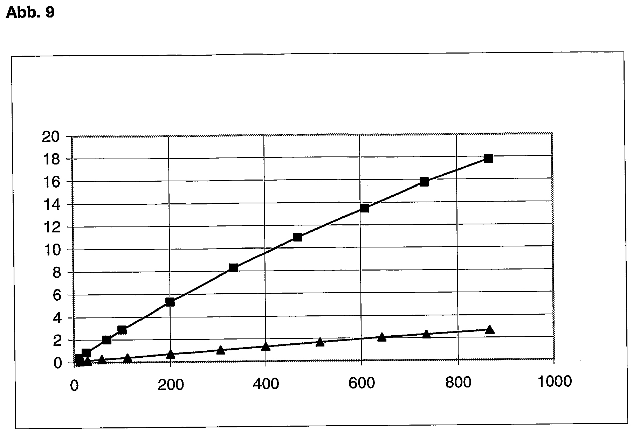

- Abbildung 9: zeigt die Adsorptionsisothermen gemäß Beispiel 4(c). Auf der Rechtswertachse ist der Absolutdruck p(abs) in mbar aufgetragen, auf der Hochwertachse die adsorbierte Menge an Methan (A) bezie- hungsweise Ethan (■), jeweils in der Einheit mg(Kohlenwasser- stoff)/g(Zeolith) .

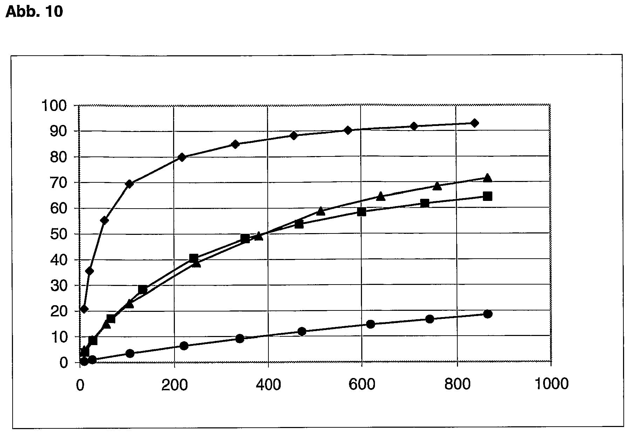

- Abbildung 10: zeigt die Adsorptionsisothermen gemäß Beispiel 4(d). Auf der Rechtswertachse ist der Absolutdruck p(abs) in mbar aufgetragen, auf der Hochwertachse die adsorbierte Menge an Propen (■), Ethen (●), 1-Buten (▲) beziehungsweise trans-2-Buten (◆), jeweils in der Einheit mg(Kohlenwasserstoff)/g(Zeolith).

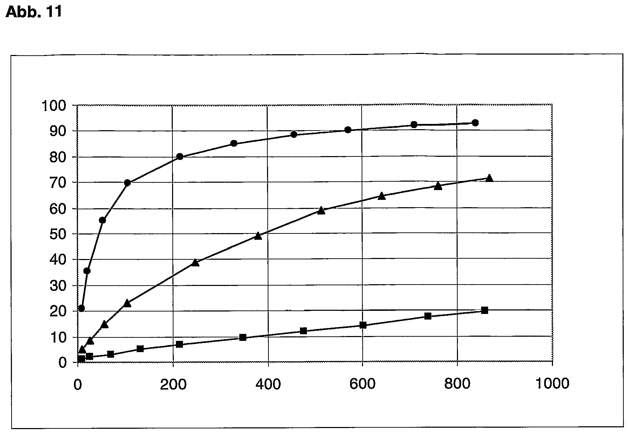

- Abbildung 11: zeigt die Adsorptionsisothermen gemäß Beispiel 4(e). Auf der Rechtswertachse ist der Absolutdruck p(abs) in mbar aufgetragen, auf der Hochwertachse die adsorbierte Menge an n-Butan (■), 1- Buten (▲) beziehungsweise trans-2-Buten (●), jeweils in der Einheit mg(Kohlenwasserstoff)/g(Zeolith).

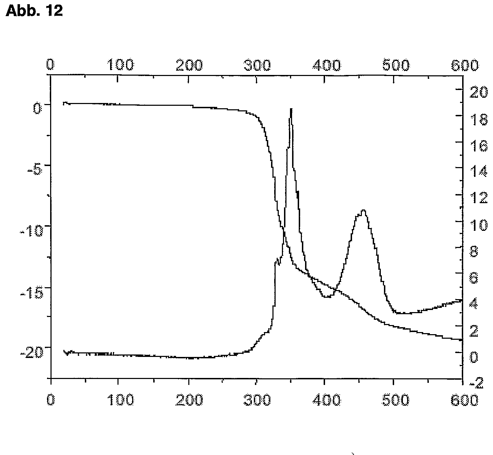

- Abbildung 12: zeigt die DTG (Differentialthermogravimetrie)-Kurve zum Übergang vom Schichtsilikat RUB-39 aus Beispiel 2 zum Gerüstsilikat RUB-41 aus Beispiel 3. Auf der Rechtswertachse ist die Temperatur in °C aufgetragen. Auf der linken Hochwertachse, die sich auf die DTG-Kurve bezieht, ist der Gewichtsverlust in %, bezogen auf das Gewicht des Ausgangsmaterials, angegeben. Das erste exotherme Maximum bei in etwa 350 °C zeigt die Entfernung der Dimethyldipropylammoniumhydroxid-Verbindung, das zweite Maximum bei etwa 550 °C die Kondensation zum Gerüstsilikat. Die DTG-Analyse wurde auf einem Bähr STA 503 mit einer Heizrate von 10 °C/h durchgeführt, wobei der getrocknete RUB-39 unter Luft von Raumtemperatur auf 600 °C aufgeheizt wurde. Die andere Kurve im Diagramm stellt die parallel auf dem gleichen Gerät durchgeführte DTA (Differentialthermoanalyse)-Kurve dar.

### Beispiele:

### Beispiel 1: Herstellung von Dimethyldipropylammoniumhydroxid

15 ml Dipropylamin wurden in 50 ml Ethanol als Lösungsmittel, KHCO₃ als Puffer mit 20 ml Methyliodid bei einer Temperatur von 40 bis 50 °C im Wasserbad unter Rühren umgesetzt. Nach 2 Stunden wurde auf Raumtemperatur abgekühlt, wobei das Produkt Dimethyldipropylammoniumiodid auskristallisierte. Das feste Filtrat wurde in Ethanol gewaschen. Eine wässrige Lösung des Iodids wurde über einen Amberlyst-Anionentauscher in das Dimethyldipropylammoniumhydroxid überführt.

### Beispiel 2: Herstellung eines Schichtsilikats

3 g amorphes Siliciumdioxid (Aerosil®) wurden mit 50 ml einer wässrigen Dimethyldipropylammoniumhydroxid-Lösung einer Konzentration von 0,4 bis 1 mol/l vermischt und gerührt, bis eine kolloidale Lösung erhalten wurde. Der Gehalt an Wasser in dieser Lösung wurde in einem Ofen bei einer Temperatur von 70 °C so eingestellt, dass eine Mischung der Zusammensetzung SiO₂ : 0,5 Dimethyldipropylammoniumhydroxid : ∼10 Wasser erhalten wurde. Die Mischung wurde anschließend in einen mit Teflon ausgekleideten Edelstahlautoklav überführt und während eines Zeitraums von 30 Tagen unter Rotation des Autoklaven mit einer Geschwindigkeit von 15 U/min auf eine Temperatur von 150 °C erwärmt. Die hierdurch erhaltene Mischung wurde anschließend mit kaltem Wasser gequencht, wobei eine dickflüssige Suspension erhalten wurde. Hieraus wurde das erfindungsgemäße Schichtsilikat durch Filtration, Waschen des Filterrückstandes mit Wasser und Trocknen des Filterrückstandes bei 75 °C erhalten.

Das Syntheseprodukt wies die in Tabelle 1 aufgeführte Reflexe im Röntgendiffraktogramm auf (Cu K alpha 1).

**Tabelle 1: Röntgendiffraktogramm des erfindungsgemäßen Schichtsilikats der Struktur RUB-39**

| 2 Theta | Intensität | I/Io |
|---|---|---|
| 8.24345 | 38624.54690 | 100 |
| 11.20594 | 6132.75830 | 16 |
| 13.39126 | 6903.00439 | 18 |
| 13.92294 | 2378.23096 | 6 |
| 14.62231 | 3522.60547 | 9 |
| 15.60788 | 2344.57275 | 6 |
| 15.73948 | 2880.48438 | 7 |
| 16.51815 | 2821.19092 | 7 |
| 17.47815 | 2041.75061 | 5 |
| 18.33579 | 3715.56616 | 10 |
| 18.57990 | 4743.49219 | 12 |
| 18.76494 | 2132.02979 | 6 |
| 20.00261 | 9294.63086 | 24 |
| 20.50116 | 3292.98145 | 9 |
| 21.21685 | 2926.98779 | 8 |
| 22.21572 | 9723.40625 | 25 |
| 22.51286 | 4358.26807 | 11 |
| 23.51819 | 10877.29880 | 28 |
| 23.66446 | 10384.66600 | 27 |

### Beispiel 3: Herstellung eines Gerüstsilikats

Das gemäß Beispiel 2 erhaltene Schichtsilikat wurde für einen Zeitraum von 12 Stunden bei einer Temperatur von 520 °C und anschließend für einen Zeitraum von 2 Stunden bei einer Temperatur von 560 °C kalziniert. Es wurde ein Gerüstsilikat erhalten, das die in Tabelle 2 aufgeführten Reflexe im Röntgendiffraktogramm aufwies (Cu K alpha 1-Strahlung).

**Tabelle 2: Röntgendiffraktogramm des erfindungsgemäßen Gerüstsilikats der Struktur RUB-41**

| 2 Theta | Intensität | I/Io |
|---|---|---|
| 10.068214 | 7238.33 | 100 |
| 11.238323 | 2074.58 | 28.8 |
| 13.142148 | 626.58 | 8.6 |
| 13.343862 | 686.61 | 9.5 |
| 15.137157 | 344.83 | 4.8 |
| 15.693608 | 977.83 | 13.5 |
| 16.611176 | 236.25 | 3.3 |
| 16.768200 | 512.23 | 7.1 |
| 19.233236 | 630.60 | 8.7 |
| 19.514395 | 1200.12 | 16.6 |
| 19.756468 | 1764.03 | 24.4 |
| 20.276875 | 117.92 | 1.6 |
| 21.006195 | 90.08 | 1.2 |
| 22.653976 | 265.87 | 3.7 |
| 23.011641 | 996.08 | 13.8 |
| 23.264645 | 267.16 | 3.7 |
| 24.154955 | 203.44 | 2.8 |
| 24.373442 | 212.81 | 2.9 |
| 26.250389 | 926.29 | 12.8 |
| 26.369091 | 966.76 | 13.2 |
| 26.547802 | 1292.96 | 17.9 |
| 26.756287 | 216.20 | 3.0 |
| 26.942410 | 486.22 | 7.1 |

### Beispiel 4: Sorptionsmessungen an dem Gerüstsilikat gemäß Beispiel 3

### (a) Messung mit Stickstoff

Eine pulverförmige, frisch kalzinierte Probe des gemäß Beispiel 3 erhaltenen Gerüstsilikats (ca. 40 mg) wurde eingewogen und über Nacht bei 120 °C und einem Vakuum von ca. 10⁻⁶ MPa ausgegast. Die Messung erfolgte anschließend mit Stickstoff bei 77 K an einer volumetrisch arbeitenden Sorptionsapparatur (Autosorb AS-6, Fa. Quantachrome).

In Abbildung 7 ist die erhaltene Isotherme wiedergegeben. Man erkennt den für mikroporöse Feststoffe typischen, stufenförmigen Verlauf einer Typ-I-Adsorptionsisotherme (vgl. DIN 66135). Die Auswertung der Daten ergab eine äquivalente Oberfläche von 510 m²/g nach der Langmuir-Methode und ein Mikroporenvolumen von 0,18 ml/g nach Dubinin-Radushkevich.

### (b) Messung mit n-Butan und iso-Butan

Eine pulverförmige, frisch kalzinierte Probe des gemäß Beispiel 3 erhaltenen Gerüstsilikats (ca. 140 mg) wurde eingewogen und über Nacht bei 120 °C und einem Vakuum von ca. 10⁻⁶ MPa ausgegast. Die Messungen mit n-Butan bzw. Isobutan (Reinheit 99,5 %) erfolgten gravimetrisch bei 296 K an einer Mikrowaage (Fa. Sartorius 4003) über den Druckbereich bis zu 800 mbar (Druckaufnehmer Fa. MKS Baratron).

In Abbildungen 8a und 8b sind die erhaltenen Isothermen gezeigt. Deutlich erkennt man, dass mit n-Butan bevorzugt das schlankere Molekül adsorbiert wird, während das sperrigere Isobutan nur geringfügig mit einer Kapazität < 0,2 Gew.-% aufgenommen wird. Somit ist eine Trennung von n-Butan und iso-Butan mit Hilfe des Gerüstsilikats RUB-41 möglich.

### (c) Messung mit Methan und Ethan

Eine pulverförmige, frisch kalzinierte Probe des gemäß Beispiel 3 erhaltenen Gerüstsilikats (ca. 140 mg) wurde eingewogen und über Nacht bei 120 °C und einem Vakuum von ca. 10⁻⁶ MPa ausgegast. Die Messungen mit Methan und Ethan (Reinheit 99,5 %) erfolgten gravimetrisch bei 296 K an einer Mikrowaage (Fa. Sartorius 4003) über den Druckbereich bis zu 866 mbar (Druckaufnehmer Fa. MKS Baratron).

In Abbildung 9 sind die erhaltenen Isothermen gezeigt. Daraus ist klar ersichtlich, dass die Trennung von Methan und Ethan mit Hilfe des Gerüstsilikats RUB-41 möglich ist.

### (d) Messung mit Ethen, Propen, 1-Buten und trans-2-Buten

Eine pulverförmige, frisch kalzinierte Probe des gemäß Beispiel 3 erhaltenen Gerüstsilikats (ca. 140 mg) wurde eingewogen und über Nacht bei 120 °C und einem Vakuum von ca. 10⁻⁶ MPa ausgegast. Die Messungen mit Ethen, Propen, 1-Buten und trans-2-Buten (Reinheit jeweils 99,5 %) erfolgten gravimetrisch bei 296 K an einer Mikrowaage (Fa. Sartorius 4003) über den Druckbereich bis zu 865 mbar (Druckaufnehmer Fa. MKS Baratron).

In Abbildung 10 sind die erhaltenen Isothermen gezeigt. Daraus ist klar ersichtlich, dass die Trennung der vier Verbindungen mit Hilfe des Gerüstsilikats RUB-41 möglich ist.

### (e) Messung mit n-Butan, 1-Buten und trans-2-Buten

Eine pulverförmige, frisch kalzinierte Probe des gemäß Beispiel 3 erhaltenen Gerüstsilikats (ca. 140 mg) wurde eingewogen und über Nacht bei 120 °C und einem Vakuum von ca. 10⁻⁶ MPa ausgegast. Die Messungen mit n-Butan, 1-Buten und trans-2-Buten (Reinheit jeweils 99,5 %) erfolgten gravimetrisch bei 296 K an einer Mikrowaage (Fa. Sartorius 4003) über den Druckbereich bis zu 857 mbar (Druckaufnehmer Fa. MKS Baratron) .

In Abbildung 10 sind die erhaltenen Isothermen gezeigt. Daraus ist klar ersichtlich, dass die Trennung der drei Verbindungen mit Hilfe des Gerüstsilikats RUB-41 möglich ist.

## Patentansprüche

1. Verfahren zur Herstellung eines mindestens Silicium und Sauerstoff enthaltenden Silikats, umfassend
(1) Mischen von Siliziumdioxid und/oder eines Siliciumdioxid-Precursors mit einer wässrigen Lösung, enthaltend mindestens eine R₁R₂R₃R₄N⁺ umfassende Tetraalkylammoniumverbindung und mindestens eine Base;
(2) Erwärmen der unter (1) erhaltenen kolloidalen Lösung auf eine Temperatur im Bereich von größer der unter dem gewählten Druck vorliegenden Siedetemperatur der kolloidalen Lösung bis 180 °C bei Normaldruck unter Erhalt einer mindestens ein Silikat enthaltenden Suspension,
**dadurch gekennzeichnet, dass** R₁ und R₂ gleich Methyl und sowohl R₃ als auch R₄ gleich n-Propyl sind.

2. Verfahren nach Anspruch 1, **dadurch gekennzeichnet, dass** die mindestens eine R₁R₂R₃R₄N⁺ umfassende Tetraalkylammoniumverbindung ein basisches Anion, bevorzugt ein Hydroxidion, enthält.

3. Verfahren nach Anspruch 1 oder 2, **dadurch gekennzeichnet, dass** die gemäß (1) eingesetzte wässrige Lösung Dimethyldipropylammoniumhydroxid (DMDPAH) enthält.

4. Verfahren nach einem der Ansprüche 1 bis 3, **dadurch gekennzeichnet, dass** die gemäß (1) erhaltene kolloidale Lösung SiO₂, DMDPAH und Wasser in den Gewichtsverhältnissen SiO₂ : (DMDPAH) : Wasser gleich 1 : (0,45-0,55) : (8-12) enthält.

5. Verfahren nach einem der Ansprüche 1 bis 4, **dadurch gekennzeichnet, dass** die gemäß (1) erhaltene kolloidale Lösung gemäß (2) bei Normaldruck auf eine Temperatur von 100 bis 180 °C erwärmt wird.

6. Verfahren nach einem der Ansprüche 1 bis 5, **dadurch gekennzeichnet, dass** die gemäß (1) erhaltene kolloidale Lösung gemäß (2) für einen Zeitraum im Bereich von 12 h bis 30 Tagen erwärmt wird.

7. Verfahren nach einem der Ansprüche 1 bis 6, **dadurch gekennzeichnet, dass** gemäß (1) amorphes Siliciumdioxid eingesetzt wird.

8. Verfahren nach einem der Ansprüche 1 bis 7, zusätzlich umfassend
(3) Abtrennung des mindestens einen Silikats aus der gemäß (2) erhaltenen Suspension.

9. Verfahren nach Anspruch 8, zusätzlich umfassend
(4) Waschen
und/oder
(5) Trocknen
des gemäß (3) erhaltenen Silikats.

10. Verfahren nach Anspruch 9, wobei das Silikat gemäß (4) mit Wasser gewaschen und/oder gemäß (5) bei einer Temperatur im Bereich von Raumtemperatur bis 80 °C getrocknet wird.

11. Verfahren nach einem der Ansprüche 1 bis 10, zusätzlich umfassend
(6) Calcinieren des gemäß (2) erhaltenen und
- gegebenenfalls gemäß (3) abgetrennten und
- gegebenenfalls gemäß (4) gewaschenen und/oder gemäß (5) getrockneten Silikates
unter Erhalt eines Gerüstsilikates.

12. Verfahren nach Anspruch 11, **dadurch gekennzeichnet, dass** die Calcinierung bei einer Temperatur im Bereich von 300 bis 600 °C erfolgt.

13. Schichtsilikat mit einem Röntgenbeugungsmuster, enthaltend mindestens die folgenden Reflexe:
| Intensität (%) | Beugungswinkel 2θ / ° [Cu K(alpha 1)] |
|---|---|
| 100 | 8,0 - 8,4 |
| 11 - 21 | 11,0 - 11,4 |
| 13 - 23 | 13,2 - 13,6 |
| 5 - 15 | 18,0 - 18,4 |
| 7 - 17 | 18,4 - 18,8 |
| 19 - 29 | 19,9 - 20,0 |
wobei sich die Angabe 100 % auf die Intensität des höchsten Peaks im Röntgendiffraktogramm bezieht.

14. Gerüstsilikat mit einem Röntgenbeugungsmuster, enthaltend mindestens die folgenden Reflexe:
| Intensität / % | Beugungswinkel 2θ / ° [Cu K(alpha 1)] |
|---|---|
| 100 | 9,8 - 10,2 |
| 24 - 34 | 11,0 - 11,4 |
| 9 - 19 | 15,5 - 15,9 |
| 12 - 22 | 19,4 - 19,6 |
| 19 - 29 | 19,6 - 19,8 |
wobei sich die Angabe 100 % auf die Intensität des höchsten Peaks im Röntgendiffraktogramm bezieht.

15. Gerüstsilikat nach Anspruch 14 mit einer thermischen Stabilität von mindestens 600 °C.

16. Gerüstsilikat nach Anspruch 14 oder 15, **dadurch gekennzeichnet, dass** das Gerüstsilikat 8MR- und 10MR-Kanäle aufweist.

17. Gerüstsilikat nach Anspruch 16, **dadurch gekennzeichnet, dass** die 8MR- und 10MR-Poren eine monomodale Porengrößenverteilung aufweisen.

18. Gerüstsilikat nach Anspruch 17, **dadurch gekennzeichnet, dass** die Poren eine spezifische Oberfläche im Bereich von 400 bis 600 m²/g, bestimmt gemäß DIN 66135, aufweisen.

19. Gerüstsilikat nach einem der Ansprüche 14 bis 18, zusätzlich enthaltend Al, B, Fe, Ti, Sn, Ge, Zr, V, Nb oder zwei oder mehr davon.

20. Formkörper, enthaltend mindestens ein Gerüstsilikat gemäß einem der Ansprüche 14 bis 19.

21. Verfahren zur Herstellung eines Formkörpers, umfassend
(I) Herstellen eines Gemischs, enthaltend ein Gerüstsilikat gemäß einem der Ansprüche 14 bis 19 und mindestens ein Bindermaterial;
(II) Kneten des Gemischs;
(III) Verformen des gekneteten Gemischs unter Erhalt mindestens eines Formkörpers;
(IV) Trocknen des mindestens einen Formkörpers;
(V) Calcinieren des mindestens einen getrockneten Formkörpers.

22. Verwendung eines Gerüstsilikats gemäß einem der Ansprüche 14 bis 19 und/oder eines Formkörpers gemäß Anspruch 20 und/oder eines Formkörpers, erhältlich durch ein Verfahren gemäß Anspruch 21, als Molekularsieb, Katalysator, Katalysatorträger oder deren Binder, als Adsorptionsmittel, Pigment, Zusatzstoff in Waschmitteln, Zusatz zu Baustoffen, zur Thioxotropierung in Farbpasten und Lacken, als Gleit- und Schmierstoff, als Flammschutz, Hilfs- und Füllstoff in Papiererzeugnissen, in bakterizid und/oder fungizid und/oder herbizid wirksamen Zusammensetzungen, zum lonenaustausch, zur Herstellung von Keramiken, in Polymeren, in elektrischen, optischen oder elektrooptischen Bauteilen und Schaltelementen oder Sensoren.

23. Verwendung nach Anspruch 22, wobei das Gerüstsilikat und/oder der Formkörper zur Abtrennung von mindestens einem Alkan und/oder mindestens einem Alken und/oder mindestens einem Alkin aus einem Gasgemisch, enthaltend mindestens zwei Alkane oder mindestens zwei Alkene oder mindestens zwei Alkine oder mindestens ein Alkan und mindestens ein Alken oder mindestens ein Alkan und mindestens ein Alkin oder mindestens ein Alken und mindestens ein Alkin oder mindestens ein Alkan und mindestens ein Alken und mindestens eine Alkin, insbesondere zur Auftrennung von Konstitutionsisomeren und/oder Konfigurationsisomeren eingesetzt werden.

24. Verwendung nach Anspruch 23 zur Auftrennung von Methan und Ethan oder zur Auftrennung von Ethen, Propen und Buten, insbesondere trans-2-Buten, oder zur Auftrennung von Butan und Buten oder zur Auftrennung von n-Butan und iso-Butan oder zur Auftrennung von 1-Buten und trans-2-Buten.

25. Vorrichtung, insbesondere ein Rohrreaktor, enthaltend mindestens ein Gerüstsilikat gemäß einem der Ansprüche 14 bis 19 und/oder einen Formkörper gemäß Anspruch 20 und/oder einen Formkörper, erhältlich durch ein Verfahren gemäß Anspruch 21, zur Abtrennung von mindestens einem Alkan und/oder mindestens einem Alken und/oder mindestens einem Alkin aus einem Gasgemisch enthaltend mindestens zwei Alkane oder mindestens zwei Alkene oder mindestens zwei Alkine oder mindestens ein Alkan und mindestens ein Alken oder mindestens ein Alkan und mindestens ein Alkin oder mindestens ein Alken und mindestens ein Alkin oder mindestens ein Alkan und mindestens ein Alken und mindestens eine Alkin.

## Claims

1. A process for the preparation of a silicate containing at least silicon and oxygen, comprising
(1) mixing of silica and/or of a silica precursor with an aqueous solution containing at least one R₁R₂R₃R₄N⁺-comprising tetraalkylammonium compound and at least one base;
(2) heating of the colloidal solution obtained under (1) to a temperature in the range from greater than the boiling point of the colloidal solution under the chosen pressure to 180°C at atmospheric pressure to give a suspension containing at least one silicate,
wherein R₁ and R₂ are methyl and both R₃ and R₄ are n-propyl.

2. The process according to claim 1, wherein the at least one R₁R₂R₃R₄N⁺-comprising tetraalkylammonium compound contains a basic anion, preferably a hydroxide ion.

3. The process according to claim 1 or 2, wherein the aqueous solution used according to (1) contains dimethyldipropylammonium hydroxide (DMDPAH).

4. The process according to any of claims 1 to 3, wherein the colloidal solution obtained according to (1) contains SiO₂, DMDPAH and water in the weight ratios SiO₂ : (DMDPAH) : water of 1 : (0.45-0.55) : (8-12).

5. The process according to any of claims 1 to 4, wherein the colloidal solution obtained according to (1) is heated according to (2) at atmospheric pressure to a temperature of from 100 to 180°C.

6. The process according to any of claims 1 to 5, wherein the colloidal solution obtained according to (1) is heated according to (2) for a period of from 12 hours to 30 days.

7. The process according to any of claims 1 to 6, wherein amorphous silica is used according to (1).

8. The process according to any of claims 1 to 7, additionally comprising
(3) separation of the at least one silicate from the suspension obtained according to (2).

9. The process according to claim 8, additionally comprising
(4) washing
and/or
(5) drying
of the silicate obtained according to (3).

10. The process according to claim 9, the silicate being washed according to (4) with water and/or being dried according to (5) at a temperature in the range from room temperature to 80°C.

11. The process according to any of claims 1 to 10, additionally comprising
(6) calcination of the silicate obtained and
- optionally separated off according to (3) and
- optionally washed according to (4) and/or dried according to (5)
to give a framework silicate.

12. The process according to claim 11, wherein the calcination is effected at from 300 to 600°C.

13. A sheet silicate having an X-ray diffraction pattern comprising at least the following reflections:
| Intensity (%) | Diffraction angle 2θ/° [Cu K(alpha 1)] |
|---|---|
| 100 | 8.0-8.4 |
| 11 - 21 | 11.0 - 11.4 |
| 13 - 23 | 13.2 - 13.6 |
| 5 - 15 | 18.0 - 18.4 |
| 7 - 17 | 18.4 - 18.8 |
| 19 - 29 | 19.9 - 20.0 |
100% relating to the intensity of the maximum peak in the X-ray diffraction pattern.

14. A framework silicate having an X-ray diffraction pattern comprising at least the following reflections:
| Intensity (%) | Diffraction angle 2θ/° [Cu K(alpha 1)] |
|---|---|
| 100 | 9.8 - 10.2 |
| 24 - 34 | 11.0 - 11.4 |
| 9 - 19 | 15.5 - 15.9 |
| 12 - 22 | 19.4 - 19.6 |
| 19 - 29 | 19.6 - 19.8 |
100% relating to the intensity of the maximum peak in the X-ray diffraction pattern.

15. The framework silicate according to claim 14 having a thermal stability of at least 600°C.

16. The framework silicate according to claim 14 or 15, which has 8 MR and 10 MR channels.

17. The framework silicate according to claim 16, wherein the 8 MR and 10 MR pores have a monomodal pore distribution.

18. The framework silicate according to claim 17, wherein the pores have a specific surface area of from 400 to 600 m²/g, determined according to DIN 66135.

19. The framework silicate according to any of claims 14 to 18, additionally comprising Al, B, Fe, Ti, Sn, Ge, Zr, V, Nb or two or more thereof.

20. A molding comprising at least one framework silicate according to any of claims 14 to 19.

21. A process for the production of a molding, comprising
(I) preparation of a mixture containing a framework silicate according to any of claims 14 to 19 and at least one binder material;
(II) kneading of the mixture;
(III) molding of the kneaded mixture to give at least one molding;
(IV) drying of the at least one molding;
(V) calcination of the at least one dried molding.

22. The use of a framework silicate according to any of claims 14 to 19 and/or of a molding according to claim 20 and/or of a molding obtainable by a process according to claim 21 as a molecular sieve, catalyst, catalyst support or binder thereof, as an adsorbent, pigment, additive in detergents, additive for building materials, for imparting thixotropic properties to coating pastes and finishes, as external and internal lubricant, as a flameproofing agent, assistant and filler in paper products, in bactericidal and/or fungicidal and/or herbicidal compositions, for ion exchange, for the production of ceramics, in polymers, in electrical, optical or electrooptical components and switching elements or sensors.

23. The use according to claim 22, the framework silicate and/or the molding being used for the separation of at least one alkane and/or at least one alkene and/or at least one alkyne from a gas mixture comprising at least two alkanes or at least two alkenes or at least two alkynes or at least one alkane and at least one alkene or at least one alkane and at least one alkyne or at least one alkene and at least one alkyne or at least one alkane and at least one alkene and at least one alkyne, in particular for the separation of constitutional isomers and/or configurational isomers.

24. The use according to claim 23 for the separation of methane and ethane or for the separation of ethene, propene and butene, in particular trans-2-butene, or for the separation of butane and butene or for the separation of n-butane and isobutane or for the separation of 1-butene and trans-2-butene.

25. An apparatus, in particular a tubular reactor, comprising at least one framework silicate according to any of claims 14 to 19 and/or a molding according to claim 20 and/or a molding obtainable by a process according to claim 21, for the separation of at least one alkane and/or at least one alkene and/or at least one alkyne from a gas mixture comprising at least two alkanes or at least two alkenes or at least two alkynes or at least one alkane and at least one alkene or at least one alkane or at least one alkyne or at least one alkene and at least one alkyne or at least one alkane and at least one alkene and at least one alkyne.

## Revendications

1. Procédé de fabrication d'un silicate contenant au moins du silicium et de l'oxygène, comprenant :
(1) le mélange de dioxyde de silicium et/ou d'un précurseur de dioxyde de silicium avec une solution aqueuse, contenant au moins un composé de tétraalkylammonium comprenant R₁R₂R₃R₄N⁺ et au moins une base ;
(2) le chauffage de la solution colloïdale obtenue en (1) à une température dans la plage allant d'une température supérieure à la température d'ébullition de la solution colloïdale à la pression choisie à 180 °C à pression normale pour obtenir une suspension contenant au moins un silicate,
**caractérisé en ce que** R₁ et R₂ représentent méthyle, et aussi bien R₃ que R₄ représentent n-propyle.

2. Procédé selon la revendication 1, **caractérisé en ce que** ledit au moins un composé de tétraalkylammonium comprenant R₁R₂R₃R₄N⁺ contient un anion basique, de préférence un ion hydroxyde.

3. Procédé selon la revendication 1 ou 2, **caractérisé en ce que** la solution aqueuse utilisée selon (1) contient de l'hydroxyde de diméthyldipropylammonium (DMDPAH).

4. Procédé selon l'une quelconque des revendications 1 à 3, **caractérisé en ce que** la solution colloïdale obtenue selon (1) contient du SiO₂, du DMDPAH et de l'eau en les rapports en poids SiO₂: (DMDPAH) :eau de 1: (0,45 à 0,55) : (8 à 12) .

5. Procédé selon l'une quelconque des revendications 1 à 4, **caractérisé en ce que** la solution colloïdale obtenue selon (1) est chauffée selon (2) à pression normale à une température de 100 à 180 °C.

6. Procédé selon l'une quelconque des revendications 1 à 5, **caractérisé en ce que** la solution colloïdale obtenue selon (1) est chauffée selon (2) pendant une durée dans la plage allant de 12 h à 30 jours.

7. Procédé selon l'une quelconque des revendications 1 à 6, **caractérisé en ce que** du dioxyde de silicium amorphe est utilisé selon (1).

8. Procédé selon l'une quelconque des revendications 1 à 7, comprenant en outre :
(3) la séparation dudit au moins un silicate de la suspension obtenue selon (2).

9. Procédé selon la revendication 8, comprenant en outre :
(4) un lavage
et/ou
(5) un séchage
du silicate obtenu selon (3).

10. Procédé selon la revendication 9, dans lequel le silicate est lavé selon (4) avec de l'eau et/ou séché selon (5) à une température dans la plage allant de la température ambiante à 80 °C.

11. Procédé selon l'une quelconque des revendications 1 à 10, comprenant en outre :
(6) la calcination du silicate obtenu selon (2) et
- éventuellement séparé selon (3) et
- éventuellement lavé selon (4) et/ou séché selon (5) ,
pour obtenir un tectosilicate.

12. Procédé selon la revendication 11, **caractérisé en ce que** la calcination a lieu à une température dans la plage allant de 300 à 600 °C.

13. Phyllosilicate présentant un motif de diffraction de rayons X qui contient au moins les réflexions suivantes :
| Intensité (%) | Angle de diffraction 2θ/° [Cu K(alpha 1)] |
|---|---|
| 100 | 8, 0 - 8,4 |
| 11 - 21 | 11,0 - 11,4 |
| 13 - 23 | 13,2 - 13,6 |
| 5 - 15 | 18,0 - 18,4 |
| 7 - 17 | 18,4 - 18,8 |
| 19 - 29 | 19,9 - 20,0 |
l'indication 100 % se rapportant à l'intensité du pic le plus élevé sur le diffractogramme de rayons X.

14. Tectosilicate présentant un motif de diffraction de rayons X qui contient au moins les réflexions suivantes :
| Intensité (%) | Angle de diffraction 2θ/° [Cu K(alpha 1)] |
|---|---|
| 100 | 9,8 - 10,2 |
| 24 - 34 | 11,0 - 11,4 |
| 9 - 19 | 15,5 - 15,9 |
| 12 - 22 | 19,4 - 19,6 |
| 19 - 29 | 19,6 - 19,8 |
l'indication 100 % se rapportant à l'intensité du pic le plus élevé sur le diffractogramme de rayons X.

15. Tectosilicate selon la revendication 14, ayant une stabilité thermique d'au moins 600 °C.

16. Tectosilicate selon la revendication 14 ou 15, **caractérisé en ce que** le tectosilicate comprend des canaux 8MR et 10MR.

17. Tectosilicate selon la revendication 16, **caractérisé en ce que** les pores 8MR et 10MR présentent une distribution monomodale des tailles de pores.

18. Tectosilicate selon la revendication 17, **caractérisé en ce que** les pores présentent une surface spécifique dans la plage allant de 400 à 600 m²/g, déterminée selon DIN 66135.

19. Tectosilicate selon l'une quelconque des revendications 14 à 18, contenant en outre Al, B, Fe, Ti, Sn, Ge, Zr, V, Nb ou deux ou plus d'entre eux.

20. Corps moulé, contenant au moins un tectosilicate selon l'une quelconque des revendications 14 à 19.

21. Procédé de fabrication d'un corps moulé, comprenant :
(I) la fabrication d'un mélange contenant un tectosilicate selon l'une quelconque des revendications 14 à 19 et au moins un matériau liant ;
(II) le malaxage du mélange ;
(III) le façonnage du mélange malaxé pour obtenir au moins un corps moulé ;
(IV) le séchage dudit au moins un corps moulé ;
(V) la calcination dudit au moins un corps moulé séché.

22. Utilisation d'un tectosilicate selon l'une quelconque des revendications 14 à 19 et/ou d'un corps moulé selon la revendication 20 et/ou d'un corps moulé pouvant être obtenu par un procédé selon la revendication 21, en tant que tamis moléculaire, catalyseur, support de catalyseur ou leur liant, en tant qu'agent d'adsorption, pigment, additif dans des détergents, additif pour matériaux de construction, pour la thixotropication dans des pâtes colorées et des vernis, en tant qu'agent glissant et lubrifiant, en tant qu'agent ignifuge, adjuvant et charge dans les produits de papier, dans des compositions à effet bactéricide et/ou fongicide et/ou herbicide, pour l'échange d'ions, pour la fabrication de céramiques, dans des polymères, dans des composants électriques, optiques ou électro-optiques et des éléments de commutation ou des capteurs.

23. Utilisation selon la revendication 22, dans laquelle le tectosilicate et/ou le corps moulé sont utilisés pour la séparation d'au moins un alcane et/ou d'au moins un alcène et/ou d'au moins un alcyne d'un mélange gazeux contenant au moins deux alcanes ou au moins deux alcènes ou au moins deux alcynes ou au moins un alcane et au moins un alcène ou au moins un alcane et au moins un alcyne ou au moins un alcène et au moins un alcyne ou au moins un alcane et au moins un alcène et au moins un alcyne, notamment pour la séparation d'isomères de constitution et/ou d'isomères de configuration.

24. Utilisation selon la revendication 23 pour la séparation de méthane et d'éthane ou pour la séparation d'éthène, de propène et de butène, notamment de trans-2-butène, ou pour la séparation de butane et de butène ou pour la séparation de n-butane et d'isobutane ou pour la séparation de 1-butène et de trans-2-butène.

25. Dispositif, notamment réacteur tubulaire, contenant au moins un tectosilicate selon l'une quelconque des revendications 14 à 19 et/ou un corps moulé selon la revendication 20 et/ou un corps moulé pouvant être obtenu par un procédé selon la revendication 21, pour la séparation d'au moins un alcane et/ou d'au moins un alcène et/ou d'au moins un alcyne d'un mélange gazeux contenant au moins deux alcanes ou au moins deux alcènes ou au moins deux alcynes ou au moins un alcane et au moins un alcène ou au moins un alcane et au moins un alcyne ou au moins un alcène et au moins un alcyne ou au moins un alcane et au moins un alcène et au moins un alcyne.
